# EUROPEAN PATENT APPLICATION

(11) **EP 4 783 633 A1**
(43) Date of publication of application: **29.07.2026**
(21) Application number: 23952602.3
(22) Date of filing: 20.09.2023
(51) Int. Cl.: H04W 12/03

(54) **COMMUNICATION METHOD, COMMUNICATION APPARATUS AND TERMINAL**

(71) Applicant: HUAWEI TECHNOLOGIES CO., LTD., Shenzhen, Guangdong 518129 (CN)
(72) Inventor: WANG, Yong, Shenzhen, Guangdong 518129 (CN); LIU, Guoquan, Shenzhen, Guangdong 518129 (CN); TANG, Weiping, Shenzhen, Guangdong 518129 (CN)
(74) Representative: Maiwald GmbH
(86) International application number: PCT/CN2023/120189
(87) International publication number: WO 2025/059942

(57) **Abstract**

A communication method, a communication apparatus, and a terminal are disclosed and applied to the field of communication technologies. In embodiments of this application, a first node may send a security protection parameter (for example, a key) of a first network to a second node in an encrypted sending manner, so that the second node can securely obtain the security protection parameter of the first network, thereby improving network availability. Further, before the first node sends the network key of the first network through encryption, the first node further needs to verify some transmitted information, that is, verify whether information transmitted between the two nodes is tampered with, to ensure that the information transmitted between the two nodes is accurate and is not attacked. An algorithm for verifying the transmitted information may be obtained through agreement between the first node and the second node. This can adapt to a case in which a plurality of nodes with different security capabilities join the network, so that the network can be applied to a scenario in which different types of devices are used, thereby improving network inclusiveness.

## Description

### TECHNICAL FIELD

This application relates to the field of communication technologies, and in particular, to the field of short-range communication technologies, for example, communication in scenarios such as intelligent vehicles, smart homes, intelligent terminals, and smart manufacturing; and specifically relates to a communication method, a communication apparatus, and a terminal.

### BACKGROUND

With continuous development of communication technologies, smart application scenarios such as smart homes, intelligent cockpits, intelligent driving, smart manufacturing, and smart transportation emerge. In the mobile internet era, communication tools are more convenient to use than traditional computers, especially desktop workstations and servers.

A wireless short-range communication system has a roaming requirement for convenience. Multi-hop networking is required in many scenarios, such as a wireless BMS network, a smart home network, and a low-power-consumption network for smart manufacturing. Typical network topologies include a star network topology, a tree network topology, a mesh network topology, and the like. When a node needs to join a new network, a node that is already in the network (referred to as an in-network node for short) may send network information to the node that needs to join the network (referred to as a network access node for short). However, with improvement of security performance of the network, security protection needs to be performed on information transmitted in the network, and a parameter (for example, a key) used for security protection also needs to be provided to the node that newly accesses the network, so that the node that newly accesses the network can obtain the information that is transmitted in the network and on which security protection is performed.

For a network including a wireless communication mode, a key usually cannot be directly transmitted via a wireless signal. Therefore, how to ensure communication security in a process of providing the network key to a network access node is a hot topic being studied by a person skilled in the art.

### SUMMARY

Embodiments of this application provide a communication method, a communication apparatus, and a terminal, to improve communication security in a process of providing a network key to a network access node and improve network availability.

According to a first aspect, an embodiment of this application provides a communication method. The method includes:

A first node sends a topology configuration message to a second node, where the topology configuration message includes information about a first network. The first node determines a first key derivation function (key derivation function, KDF) through agreement with the second node, where the first KDF is a KDF supported by the second node. The first node verifies the first information with the second node based on the first KDF, and sends a network key of the first network to the second node through encryption when successfully verifying the first information.

In some solutions, the network key of the first network is used to perform security protection on a message transmitted in the first network. For example, the network key of the first network is used to perform security protection on a network layer message transmitted between nodes in the network, and the security protection includes encryption, integrity protection, authenticated encryption, and the like. Alternatively, the network key of the first network is used to derive a session key, and then, the security key is used for session security protection.

Optionally, the first network includes the first node. Alternatively, the first node may obtain the information about the first network. Optionally, the method may be implemented by a hardware module or a software module of the first node. The information about the first network may include one or more of an identifier of a security algorithm of the first network, an identity (identity, ID) of the first network, a topology type of the first network, a network priority of the first network, an address assignment manner of the first network, or the like. The security algorithm may include one or more of an encryption algorithm, an integrity protection algorithm, an authenticated encryption algorithm, or the like.

In this embodiment of this application, in a process in which the second node joins the first network, the first node that is already in the first network may send the topology configuration message to the second node, and the information about the first network carried in the topology configuration message mainly includes some attribute information of the network. However, for some secret information of the first network, for example, the network key, the first node does not directly include the secret information in the topology configuration message, but needs to send the secret information to the second node in an encrypted sending manner.

Further, before the network key of the first network is sent through encryption, the first node and the second node need to perform information verification (for example, verification on the first information), that is, verify whether the first information shared between the first node and the second node is tampered with. For example, the first information may include information transmitted between the first node and the second node, for example, information included in the topology configuration message and/or one or more types of information mentioned below. Further, the first information may further include a parameter, a key, and the like that are predetermined between the first node and the second node.

Specifically, during information verification, any node needs to first generate a verification value and send the verification value to a peer party for verification. Generation of the verification value depends on the security algorithm. Because there are various types of nodes in the network, security capabilities of nodes joining the network may be different. In this application, the first KDF may be obtained through agreement between the first node and the second node, and the first information is verified based on the first KDF. This can adapt to a case in which a plurality of nodes with different security capabilities join the network, so that the network can be applied to a scenario in which different types of devices are used, thereby improving network inclusiveness.

In this application, a message sent by the first node and a message received by the first node may be transmitted via a wireless signal. When the first node is connected to the second node, a manner of a connection between the first node and the second node may be a wireless connection. Because the wireless connection is easily attacked by an attacker, the solution provided in this embodiment of this application can significantly improve communication security in a wireless transmission case.

**In a possible implementation of the first aspect,** the method further includes: sending an ID of the network key of the first network to the second node. Optionally, the network key of the first network may be a number, a character string, or the like. Alternatively, optionally, the ID of the network key of the first network may be derived based on the network key of the first network.

In some solutions, the ID of the network key of the first network and the network key of the first network may be carried in a same message.

**In a possible implementation of the first aspect,** the information transmitted between the first node and the second node includes information included in the topology configuration message. In other words, the first information includes the information included in the topology configuration message.

Optionally, the topology configuration message may include a plurality of pieces of information. In this case, the first information may include some information in the topology configuration message. Alternatively, optionally, the first information may include all information in the topology configuration message, or include the entire topology configuration message.

**In a possible implementation of the first aspect,** verifying the first information with the second node based on the first KDF includes: receiving a first verification value from the second node, and verifying the first verification value based on at least the first KDF and the information included in the topology configuration message. The first verification value is associated with at least the first KDF and the information included in the topology configuration message. Further, successfully verifying the first information includes: successfully verifying the first verification value. Optionally, the first verification value may be included in a third message, or may be carried in a third message.

In the foregoing implementation, the second node may generate the verification value based on at least the first KDF and information included in the topology configuration message, and the first node may verify the verification value based on the first KDF and the same information included in the topology configuration message. If verification succeeds, it indicates that the information included in the topology configuration message received by the second node is consistent with the information sent by the first node to the second node, that is, the information is not tampered with. In this way, it can be determined that the information received by the second node is accurate, and it indicates that an environment of communication between the second node and the first node is secure, thereby improving communication security.

**In a possible implementation of the first aspect,** the first KDF may be a KDF with a highest priority in a KDF supported by the second node. Optionally, the first KDF may be a KDF supported by both the first node and the second node. In this case, the first KDF may be the KDF supported by both the first node and the second node, and is a KDF with a highest priority.

**In another possible implementation of the first aspect,** the first node may select the first KDF from the KDF supported by both the second node and the first node, and indicate the selected first KDF to the second node. The first node is responsible for selecting the KDF, and a calculation amount may be concentrated on a first node side. This is applicable to a scenario in which the first node has a stronger calculation capability, and can increase a network access speed. For example, in some wireless systems, a grant node creates a network and is connected to another grant node to form a network, and a terminal node joins a network created by a grant node by accessing the grant node. Therefore, an in-network node usually has a stronger communication capability or calculation capability than a network access node. Therefore, the in-network node is responsible for calculation during selection, so that a speed of selecting the KDF can be increased, and a delay in a network access process can be shortened.

In addition, when a KDF is selected based on a priority, the first node selects a KDF, and the in-network node may select a KDF based on a consistent priority. This helps unify KDF selection standards for nodes in the network.

**In another possible implementation of the first aspect,** determining the first KDF through agreement with the second node includes: receiving a KDF capability of the second node from the second node, and sending indication information of the first KDF to the second node. The KDF capability of the second node indicates the KDF supported by the second node.

In some scenarios, the KDF capability of the second node, the indication information of the first KDF, and the like also belong to the first information. In this way, the first node and the second node can verify whether the information is tampered with, thereby improving security.

**In another possible implementation of the first aspect,** determining the first KDF through agreement with the second node includes: receiving a first message from the second node, and sending a second message to the second node. The first message includes a KDF capability of the second node, and the second message includes at least the indication information of the first KDF. It should be understood that the first message and the second message may further include other information.

**In another possible implementation of the first aspect,** the information transmitted between the first node and the second node includes one or more of information included in the second message, information included in the topology configuration message, and the like. Similarly, in a process in which the second message includes a plurality of pieces of information, the information included in the second message herein may be some information in the second message, or may be all information (or referred to as the entire second message).

**In another possible implementation of the first aspect,** verifying the first information with the second node based on the first KDF includes: receiving a third message from the second node, where the third message includes a first verification value; and verifying the first verification value based on the first KDF, a first key, the information included in the second message, and the information included in the topology configuration message. The first verification value is associated with the first KDF, the first key, the information included in the second message, and the information included in the topology configuration message, and the first key may be a key obtained through agreement between the first node and the second node. Further, successfully verifying the first information includes: successfully verifying the first verification value.

In this implementation, the first information may be understood as the information included in the second message and the information included in the topology configuration message. Alternatively, the first information may be understood as the first key, the information included in the second message, and the information included in the topology configuration message.

**In another possible implementation of the first aspect,** verifying the first information with the second node based on the first KDF includes: receiving a third message from the second node, where the third message includes a first verification value; and verifying the first verification value based on the first KDF, a first parameter, the information included in the second message, and the information included in the topology configuration message. The first verification value is associated with the first KDF, the first parameter, the information included in the second message, and the information included in the topology configuration message, and a value of the first parameter is predefined. For example, the first parameter is 128-bit data, and further, 128 bits are all 0. Further, successfully verifying the first information includes: successfully verifying the first verification value.

In this implementation, the first information is the information included in the second message and the information included in the topology configuration message. Alternatively, the first information is the first parameter, the information included in the second message, and the information included in the topology configuration message.

**In another possible implementation of the first aspect,** the method further includes: sending a KDF capability of the first node to the second node, where the KDF capability of the first node indicates a KDF supported by the first node; and receiving the indication information of the first KDF from the second node. In some scenarios, the KDF capability of the first node, the indication information of the first KDF, and the like also belong to the first information.

**In another possible implementation of the first aspect,** security protection is performed in a process of verifying the first information with the second node based on the first KDF, to further improve security.

For example, the first information is verified by verifying the first verification value. In an example, the first verification value is encrypted in a transmission process. For example, a message carrying the first verification value is encrypted at an access layer. For another example, the first verification value may be encrypted based on a key to form ciphertext, and the second node may send the ciphertext of the first verification value. In another example, a parameter participating in generating the first verification value includes a key. Further, the key participating in generating the first verification value may be obtained through agreement between the first node and the second node, or may be a shared key preconfigured in the first node and the second node.

**In another possible implementation of the first aspect,** the method further includes: sending a first random number to the second node. The random number may belong to the first information, to determine whether a message carrying the random number is tampered with.

Optionally, the first random number may be included in the second message, that is, the second message includes the first random number.

**In another possible implementation of the first aspect,** the method further includes: generating a second verification value based on the first KDF, information included in the third message, information included in the first message, the information included in the topology configuration message, and the first key; and sending the second verification value to the second node.

Further, the method further includes: receiving a second random number from the second node. Optionally, the second random number is included in the third message.

**Optionally,** the second verification value is carried in a fifth message sent by the first node to the second node. Further, security protection may be performed in a process of receiving the third message and sending the fifth message.

**In another possible implementation of the first aspect**, the method further includes:
determining the first key through agreement with the second node based on the first key agreement algorithm. The first key (DH key) or a key derived from the first key is used to perform security protection on the information transmitted between the first node and the second node. In other words, the first key may be directly used for information encryption in a communication process. Alternatively, optionally, the first key may be used to derive another key, and a key derived from the first key may be used for information encryption in a communication process. In this implementation, the first key agreement algorithm is an algorithm supported by the second node, and may further be a key agreement algorithm with a highest priority in key agreement algorithms supported by the second node. This can adapt to a scenario in which nodes having different key agreement capabilities join the first network.

Optionally, the first key agreement algorithm also belongs to a key agreement algorithm supported by the first node. In other words, the first key agreement algorithm is a key agreement algorithm that has a highest priority and that is supported by both the first node and the second node.

An example process of obtaining the first key through agreement is as follows: The first node and the second node determine respective private keys. The first node determines a first public key based on the private key of the first node and a public key determined based on the first key agreement algorithm, and provides the first public key to the second node. The second node determines a second public key based on the private key of the second node and a public key determined based on the first key agreement algorithm, and provides the second public key to the first node. The first node determines a first key based on the private key of the first node and the second public key, and the second node determines a first key based on the private key of the second node and the first public key. If the exchanged public keys are not tampered with, the first keys determined by the two nodes are consistent.

Optionally, the first public key may be carried in the second message, and the second public key may be carried in the first message or the third message.

**In another possible implementation of the first aspect,** the first key agreement algorithm may be determined through agreement between the first node and the second node. That is, the first node and the second node may determine the first key agreement algorithm through agreement, to facilitate subsequent key agreement. Alternatively, the first key agreement algorithm may be configured by the first node. For example, an identifier of the first key agreement algorithm may be carried in a key configuration message. For example, the first key agreement algorithm is a key agreement algorithm used by the first network.

**In an implementation of determining the key agreement algorithm,** the communication method further includes: sending a key agreement algorithm capability of the first node to the second node, where the key agreement algorithm capability of the first node indicates a key agreement algorithm supported by the first node; and receiving indication information, sent by the second node, of the first key agreement algorithm.

Optionally, the key agreement algorithm capability of the first node is included in the topology configuration message, and the indication information of the first key agreement algorithm is included in the first message.

**In another implementation of determining the key agreement algorithm,** the communication method further includes: receiving a key agreement algorithm capability of the second node from the second node, where the key agreement algorithm capability of the second node includes the key agreement algorithm supported by the second node; and sending indication information of the first key agreement algorithm to the second node.

Optionally, the key agreement algorithm capability of the second node is included in the first message, and the indication information of the first key agreement algorithm is included in the second message.

**In another possible implementation of the first aspect,** sending the network key of the first network to the second node through encryption includes:
deriving an encryption key from the first key; and
encrypting a key of a first network layer based on the encryption key, to obtain ciphertext of the network key of the first network; and
sending the ciphertext of the network key of the first network to the second node.

In this implementation, the first node and the second node obtains the key through agreement, and secure transmission of the network key of the first network can be implemented based on the key.

Optionally, this implementation may be performed when access layer encryption between the first node and the second node is not enabled. For example, the first node and the second node establish an access layer connection. When encryption of the access layer connection is not enabled, the first node and the second node obtain the first key through agreement based on the first key agreement algorithm, to encrypt the network key. Optionally, the key agreement algorithm is further determined before the first key is determined.

**In another possible implementation of the first aspect,** before sending the network key of the first network to the second node through encryption, the method further includes: establishing an access layer connection to the second node. Further, when encryption of the access layer connection between the first node and the second node is not enabled, the first node and the second node implement the method in the first aspect. For example, when the access layer connection is not enabled, the first node and the second node determine the first key derivation function KDF through agreement.

Optionally, when encryption of the access layer connection is enabled, the first node may directly send the network key of the first network via the encrypted access layer without agreeing on the KDF or verifying the first information.

**In another possible implementation of the first aspect,** encryption of an access layer connection between the first node and the second node is enabled, and the method further includes: sending a fourth message to the second node, where the fourth message includes the network key of the first network, and the fourth message is encrypted at an access layer.

In this implementation, before joining the first network, the second node first establishes the access layer connection to the first node. When the message is encrypted at the access layer, the first node may securely transmit the network key of the first network based on an access layer encryption mechanism. For example, the first node may encrypt the fourth message at the access layer established by the first node.

Optionally, the fourth message further includes the ID of the network key of the first network.

**In another possible implementation of the first aspect,** information about the security algorithm of the first network may not be carried in the topology configuration message. For example, the information about the security algorithm of the first network may be further carried in the second message or the like.

**In another possible implementation of the first aspect,** the security algorithm of the first network is preconfigured in the first node, for example, is configured in the first node by the grant node or a control node.

**In another possible implementation of the first aspect,** the security algorithm of the first network is obtained through agreement between the first node and the second node. For example, the communication method further includes: receiving security capability information of the second node from the second node, where the security capability information of the second node indicates a security algorithm supported by the second node; and determining the security algorithm of the first network, where the security algorithm of the first network is a security algorithm supported by the second node and the first node. Further, the first node may provide an identifier of the determined security algorithm of the first network to the second node. This example is described by using an example in which the first node selects the first key agreement algorithm. In some scenarios, the second node may alternatively select a security algorithm of the first network based on security capability information of the first node.

Further, the foregoing implementation may be implemented when a new node joins the first network for the first time. For example, when the first node is a unique node in the first network before the second node joins the first network, the first node and the second node agree on the session security key of the first network. For another example, the first node is the grant node, and the grant node may create the first network (in this case, the first node is the unique node in the first network). In this case, when a 1^{st} second node performs a procedure of joining the first network, the first node and the second node agree on the session security key of the first network.

**In another possible implementation of the first aspect,** the method is applied to a case in which the second node supports the security algorithm of the first network. Further, the first node or the second node may determine, based on the identifier of the security algorithm used in the first network and the security capability of the second node, whether the second node supports the security algorithm of the first network.

For the second node, if the second node does not support the security algorithm of the first network, the second node may choose to end the procedure of joining the first network, or may not join the first network; and may further indicate, to the second node, that joining the first network fails, for example, send indication code of a failure cause. If the second node supports the security algorithm of the first network, the second node continues the procedure of joining the first network.

It should be noted that the second node may check, in any phase, whether the security algorithm of the first network is supported. For example, after receiving the identifier of the security algorithm of the first network, the second node checks whether the second node supports the security algorithm of the first network. If it is checked that the second node does not support the security algorithm of the first network, the current procedure of joining the first network is ended. For example, a message related to joining the first network may be transmitted to (for example, sent to and/or received from) the first node.

For the first node, the first node may receive the security capability information from the second node, where the security capability information of the second node indicates the security algorithm supported by the second node. If the second node does not support the security algorithm of the first network, the second message may be sent to the second node, where the second message indicates that joining the first network fails. Further, a procedure of adding the second node to the first network may be ended. For example, a message related to joining the first network may not be transmitted to (for example, sent to and/or received from) the second node.

On the contrary, if the second node supports the security algorithm of the first network, the first node continues to perform the procedure of adding the second node to the first network. For example, if the second node supports the security algorithm of the first network, the step of sending the network key of the first network to the second node through encryption is performed, that is, the step of sending the network key of the first network to the second node through encryption is performed when the second node supports the security algorithm of the first network.

**According to a second aspect, an embodiment of this application provides a communication method, including:**
The second node receives a topology configuration message from a first node, where the topology configuration message includes information about a first network. The second node determines a first key derivation function KDF through agreement with the first node, generates a first verification value based on the first KDF and first information, and sends the first verification value to the first node, where the first KDF is a KDF jointly supported by the second node, and the first information includes information transmitted between the first node and the second node. The second node receives a network key of the first network sent by the first node through encryption. The network key of the first network is used to perform security protection on a network layer between nodes in the first network.

Optionally, the method may be implemented by a hardware module or a software module of the second node.

**In a possible implementation of the second aspect,** the information transmitted between the first node and the second node includes information included in the topology configuration message.

**In a possible implementation of the second aspect,** the first KDF may be a KDF with a highest priority in a KDF supported by the second node. Optionally, the first KDF may be a KDF supported by both the first node and the second node. In this case, the first KDF may be the KDF supported by both the first node and the second node, and is a KDF with a highest priority.

**In a possible implementation of the second aspect,** determining the first KDF through agreement with the second node includes:
sending a KDF capability of the second node to the first node, and receiving indication information of the first KDF from the first node. In some scenarios, the KDF capability of the second node, the indication information of the first KDF, and the like also belong to the first information. In this way, the first node and the second node can verify whether the information is tampered with, thereby improving security.

**In another possible implementation of the second aspect,** the second node may select the first KDF from the KDF supported by both the second node and the first node, and indicate the selected first KDF to the second node. For example, the second node receives a KDF capability of the first node from the first node, and sends the indication information of the first KDF to the first node. The KDF capability of the first node indicates a KDF supported by the first node.

The KDF capability of the first node may be carried in the topology configuration message, and the indication information of the first KDF may be carried in a first message or a third message. Alternatively, the KDF capability of the first node may be carried in a second message, and the indication information of the first KDF may be carried in a third message.

In some scenarios, the KDF capability of the first node may be sent through broadcast or multicast before a network access device establishes a connection, so that the second node obtains the KDF capability of the first node when scanning the first node (that is, after receiving a broadcast or multicast message), and carries the specified first KDF when initiating a connection to the first node, thereby reducing signaling overheads.

In some scenarios, the first node provides the KDF capability of the first node to the second node. When the second node does not support any KDF supported by the first node, the second node may no longer perform a subsequent procedure related to "joining the first network", thereby reducing signaling overheads and calculation consumption. In addition, when the second node ends the procedure of "joining the first network", the first node may usually not actively indicate, to the first node, that joining fails (or a terminal).

**In another possible implementation of the second aspect,** the information transmitted between the first node and the second node includes information included in the second message and/or information included in the topology configuration message.

**In another possible implementation of the second aspect,** generating the first verification value based on at least the first KDF, the information included in the second message, and the information included in the topology configuration message includes: generating the first verification value based on the information included in the second message and the information included in the topology configuration message, and sending a third message to the first node, where the third message includes the first verification value.

**In another possible implementation of the second aspect,** generating the first verification value based on the first KDF and the first information includes:
generating the first verification value based on the first KDF, a first key, the information included in the second message, and the information included in the topology configuration message, where the first key is obtained through agreement between the first node and the second node.

Sending the first verification value to the first node includes: sending a third message to the first node, where the third message includes the first verification value.

**In another possible implementation of the second aspect,** generating the first verification value based on the first KDF and the first information includes:
generating the first verification value based on the first KDF, a first parameter, the information included in the second message, and the information included in the topology configuration message, where the first key is obtained through agreement between the first node and the second node, and a value of the first parameter is predefined.

Sending the first verification value to the first node includes: sending a third message to the first node, where the third message includes the first verification value.

The value of the first parameter is predefined, for example, 128 bits are all 0.

**In another possible implementation of the second aspect,** the method further includes: receiving a first random number from the second node, where the first random number is used to participate in generating a verification value, or is used to derive a key or the like.

Optionally, a second random number may be included in the second message. Further, the first information includes the second random number in the second message, that is, the first random number may participate in generating the first verification value.

**In another possible implementation of the second aspect**, the method further includes:
receiving a second verification value from the first node, where the second verification value is associated with the first KDF and at least one of the following information: information included in the third message, the information included in the first message, the information included in the topology configuration message, and the first key; and verifying the first verification value based on the first KDF and the same information.

For example, the second verification value is associated with the first KDF, the information included in the third message, the information included in the first message, the information included in the topology configuration message, and the first key. The second node verifies the second verification value based on the first KDF, the information included in the third message, the information included in the first message, the information included in the topology configuration message, and the first key.

Optionally, the second verification value may be carried in a message for sending, for example, carried in a fifth message for sending.

**In another possible implementation of the second aspect**, the method further includes:
determining the first key based on the first key agreement algorithm, where the first key or a key derived from the first key is used to perform security protection on the information transmitted between the first node and the second node.

**In another possible implementation of the second aspect**, the method further includes:
determining a first key agreement algorithm through agreement with the first node, where the first key agreement algorithm is a key agreement algorithm supported by the second node.

**In another possible implementation of the second aspect,** determining the first key agreement algorithm through agreement with the first node includes:
receiving a key agreement algorithm capability of the first node from the first node, where the key agreement algorithm capability of the first node includes a key agreement algorithm supported by the first node; and
sending indication information of the first key agreement algorithm to the first node, where the first key agreement algorithm is the key agreement algorithm supported by the second node.

Optionally, the key agreement algorithm capability of the first node is included in the topology configuration message, and the indication information of the first key agreement algorithm is included in the first message.

**In another possible implementation of the second aspect,** determining the first key agreement algorithm through agreement with the first node includes:
sending a key agreement algorithm capability of the second node to the first node, where the key agreement algorithm capability of the second node includes the key agreement algorithm supported by the second node; and
receiving indication information of the first key agreement algorithm from the first node, where the first key agreement algorithm is the key agreement algorithm supported by the second node.

Optionally, the key agreement algorithm capability of the second node is included in the first message, and the indication information of the first key agreement algorithm is included in the second message.

**In another possible implementation of the second aspect,** receiving the network key of the first network sent by the first node through encryption includes: receiving ciphertext of the network key of the first network.

The method further includes:
deriving an encryption key from the first key; and
decrypting the ciphertext of the network key of the first network layer based on the encryption key, to obtain the network key of the first network.

**In another possible implementation of the second aspect**, the method further includes:
establishing an access layer connection to the first node, where access layer encryption is enabled.

Receiving the network key of the first network sent by the first node through encryption includes:
receiving a fourth message, where the fourth message includes the network key of the first network, and the fourth message is encrypted at an access layer; and
decrypting the fourth message at the access layer to obtain the network key of the first network.

Optionally, each of the first node and the second node includes an access layer, the fourth message may be encrypted at the access layer of the first node, and the second node may decrypt the fourth message at the access layer of the second node to obtain the network key of the first network.

**In another possible implementation of the second aspect**, the method further includes:
sending security capability information of the second node to the first node, where the security capability information of the second node indicates a security algorithm supported by the second node.

**In another possible implementation of the second aspect,** the network key of the first network is sent when the second node supports the security algorithm of the first network.

The method further includes: receiving a second message from the first node, where the second message indicates that the second node fails to join the first network.

According to a third aspect, an embodiment of this application provides a communication apparatus. The communication apparatus includes a communication unit and a processing unit. The communication apparatus is configured to implement the method according to any one of implementations of the first aspect or the method according to any one of implementations of the second aspect.

According to a fourth aspect, an embodiment of this application provides a communication apparatus. The communication apparatus includes a processor. When the processor invokes a computer program or instructions in a memory, the method according to any one of implementations of the first aspect is implemented, or the method according to any one of implementations of the second aspect is implemented.

According to a fifth aspect, an embodiment of this application provides a communication apparatus, including a logic circuit and an interface, where the logic circuit is coupled to the interface.

The interface is configured to input to-be-processed data, and the logic circuit processes the to-be-processed data according to the method in any one of implementations of the first aspect or the second aspect, to obtain processed data. The interface is further configured to output the processed data.

According to a sixth aspect, an embodiment of this application provides a computer-readable storage medium. The computer-readable storage medium is configured to store instructions or a computer program. When the instructions or the computer program is executed, the method according to any one of implementations of the first aspect is implemented, or the method according to any one of implementations of the second aspect is implemented.

According to a seventh aspect, an embodiment of this application provides a computer program product. When instructions or a computer program in the computer program product is executed, the method according to any one of implementations of the first aspect is implemented, or the method according to any one of implementations of the second aspect is implemented.

According to an eighth aspect, an embodiment of this application provides a terminal. The terminal includes the communication apparatus according to any one of the third aspect to the fifth aspect. Further, the terminal may be an intelligent terminal or a transportation means like a vehicle, an uncrewed aerial vehicle, or a robot.

According to a ninth aspect, an embodiment of this application provides a communication system. The communication system includes a first node and a second node. The first node is configured to implement the method according to any one of implementations of the first aspect. The second node is configured to implement the method according to any one of implementations of the second aspect.

### BRIEF DESCRIPTION OF DRAWINGS

The following briefly describes accompanying drawings used for describing embodiments.
FIG. 1 is a diagram of an architecture of a communication system according to an embodiment of this application;
FIG. 2 is a schematic flowchart of a communication method according to an embodiment of this application;
FIG. 3 is a diagram of an association procedure without security context;
FIG. 4 is a diagram of an association procedure with security context;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a diagram of a structure of another communication apparatus according to an embodiment of this application; and
FIG. 14 is a diagram of a structure of another communication apparatus according to an embodiment of this application.

### DESCRIPTION OF EMBODIMENTS

The following describes embodiments of this application in detail with reference to accompanying drawings.

The following first describes a node. The node is a device having a communication capability, and includes but is not limited to one or more of user equipment, a network device, an industrial device, and the like. The user equipment includes but is not limited to a handheld terminal, a wearable terminal, a transportation means, a vehicle-mounted device, a sensing device, a smart home device, or a leisure and entertainment device. The handheld terminal includes but is not limited to a mobile phone, a tablet, and a notebook computer. The wearable device includes but is not limited to a headset, a smart band, a smartwatch, or smart glasses. The transportation means includes but is not limited to a vehicle, a ship, an aircraft, rail transport (like a subway and a high-speed railway), or a logistics robot (like an automated guided vehicle (automated guided vehicle, AGV)). The vehicle-mounted device includes but is not limited to a domain controller (domain controller, DC), a screen, a microphone, a speaker, an electronic key, keyless entry, a startup system controller, a battery management system (battery management system, BMS), a battery pack, or a cell. The sensing device includes but is not limited to a camera, a radar, a lidar, an illumination sensor, a temperature sensor, or a humidity sensor. The smart home device includes but is not limited to a projector, a smart television, a smart refrigerator, a smart home gateway, or a security device. The leisure and entertainment device is, for example, a virtual reality (virtual reality, VR) device, a mixed reality (Mixed Reality, MR) device, a massage chair, a home theater, a game control device, or a 4D cinema cockpit.

The network device includes but is not limited to a router, a switch, or a base station. The industrial device is, for example, an industrial robot or a mechanical arm.

The node in embodiments of this application may be used in various scenarios such as intelligent vehicles, smart homes, intelligent terminals, smart manufacturing, or smart exhibition halls. In some application scenarios or some network types, a device having a similar communication capability may not be referred to as a node. However, for ease of description, devices having a communication capability are collectively referred to as nodes in embodiments of this application.

It should be understood that a communication method, a communication apparatus, a communication system, a node, or the like in embodiments of this application is applicable to a plurality of networks, for example, applicable to a wired communication network, a wireless communication network, or a network formed by a combination of wired communication and wireless communication. For example, the wireless communication network includes a network connected by using the following communication technologies: SparkLink (SparkLink, or NearLink) 802.11b/g, Bluetooth (Bluetooth), Zigbee (Zigbee), a radio frequency identification (radio frequency identification, RFID) technology, an ultra-wideband (ultra-wideband, UWB) technology, or a wireless short-distance communication system; or a long-range connection technology including radio access type technologies such as a long term evolution (Long Term Evolution, long term evolution)-based communication technology, a 5th generation mobile communication technology (5th generation mobile networks or 5th generation wireless systems, 5th-Generation, 5G or 5G technology for short), a global system for mobile communications (global System for mobile communications, GSM), a general packet radio service (general packet radio Service, GPRS), a universal mobile communications system (universal mobile telecommunications system, UMTS). For another example, the wired communication network includes a network connected by using one or more of the following communication technologies: one or more of an optical fiber connection technology, a vehicle-mounted wired communication technology, a controller area network (Controller Area Network, CAN), a local interconnect network bus (Local Interconnect Network, LIN), a CAN flexible data rate (CAN Flexible Data-Rate, CAN FD), or an automotive Ethernet.

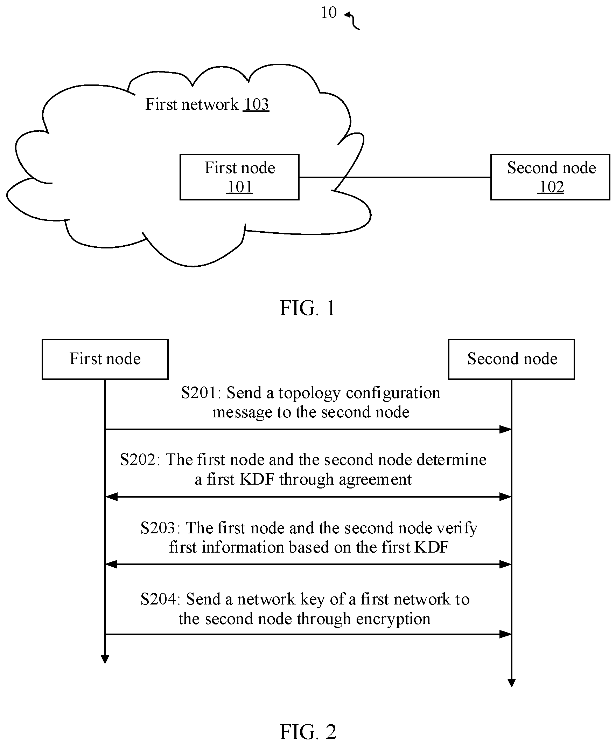

FIG. 1 is a diagram of an architecture of a communication system according to an embodiment of this application. The communication system 10 may include a first node 101 and a second node 102.

Each of the first node 101 and the second node 102 has a communication capability. The communication capability herein may include a wireless communication capability, for example, a connection by using a short-range wireless communication technology (described below). In addition, the first node 101 and the second node 102 may establish a connection (as shown in FIG. 1, the first node 101 is connected to the second node 102 through a solid line). A communication connection herein includes a direct connection, a connection through an intermediate node (for example, a control node), and the like. In the solution shown in FIG. 1, a connection between any two nodes may be a wired connection, a wireless connection, or a combination thereof. It should be understood that, because a network model includes a plurality of layers, the connection herein may include a connection between peer entities at some layers in the node, for example, an access layer connection.

The first node 101 belongs to a first network 103. Certainly, the first network 103 may also include another node in addition to the first node 101. A topology formed by a plurality of nodes may be a star topology, a tree topology, a mesh (mesh) topology, or the like. In other words, a topology of the first network may include one of the following: a star topology, a tree topology, a mesh topology, or the like. In the first network, a message of a node may be transmitted to another node in the network. To ensure security, in some scenarios, with improvement of network security performance, security protection needs to be performed on information transmitted in the network. A security protection parameter including a network key of the first network is used as an example. The network key of the first network may be configured for the node in the first network. The node in the first network may encrypt and decrypt the transmitted message based on the network key.

The security protection parameter including the network key of the first network is still used as an example. In a process in which a new node (for example, the second node) joins the first network, the network key of the first network needs to be sent to the second node, so that the second node can obtain information encrypted based on the network key in the first network. For example, the first node may configure the network key of the first network for the second node.

In embodiments of this application, the first node may send the security protection parameter (for example, a key) of the first network to the second node in a secure manner, so that the second node can securely obtain the security protection parameter of the first network, thereby improving network availability. The security protection parameter being a network key is used as an example. The first node may obtain a first key through agreement with the second node, encrypt the network key based on the first key to form ciphertext, and transmit the network key in a form of the ciphertext. Alternatively, the first node and the second node establish an access layer connection, and when encrypted transmission is enabled for data transmission at an access layer, a message carrying the network key may be sent to the second node after being encrypted at the access layer.

Further, before the first node sends the network key of the first network through encryption, the first node further needs to verify information received by the second node, that is, verify whether the information received by the second node is tampered with, to ensure that information transmitted between the two nodes is accurate and is not attacked.

In some solutions, a verification value needs to be first generated during information verification, and generation of the verification value depends on a security algorithm. Because there are various types of nodes in the network, security capabilities of nodes joining the network may be different. However, in this application, an algorithm used for verification may be obtained through agreement between the first node and the second node. This can adapt to a case in which a plurality of nodes with different security capabilities join the network, so that the network can be applied to a scenario in which different types of devices are used, thereby improving network inclusiveness.

The following describes the method provided in embodiments of this application by using an example.

FIG. 2 is a schematic flowchart of a communication method according to an embodiment of this application. Optionally, the method may be implemented based on the communication system shown in FIG. 1. The communication method shown in FIG. 2 may include one or more steps of step S201 to step S204. It should be understood that, for ease of description herein, a sequence of S201 to S204 is used for description, and this is not intended to limit execution in the sequence. An execution sequence, execution time, a quantity of execution times, and the like of the foregoing one or more steps are not limited in embodiments of this application. Step S201 to step S204 are specifically as follows.

Step S201: A first node sends a topology configuration message to a second node.

Correspondingly, the second node may receive the topology configuration message from the first node. Optionally, a first network includes the first node. Alternatively, the first node may obtain information about the first network.

The topology configuration message includes the information about the first network. The information about the first network may include one or more of an identifier of a security algorithm of the first network, an identity (identity, ID) of the first network, a topology type of the first network, a network priority of the first network, an address assignment manner of the first network, or the like. The security algorithm may include one or more of an encryption algorithm, an integrity protection algorithm, an authenticated encryption algorithm, or the like. Optionally, the first network includes the first node. Alternatively, the first node may obtain the information about the first network. In some solutions, information about the security algorithm of the first network may not be carried in the topology configuration message. For example, the information about the security algorithm of the first network may further be carried in the following second message, network key configuration message, or the like.

In some possible implementations, the identifier of the security algorithm indicates a security algorithm used by the first network, and the identifier of the security algorithm includes but is not limited to an algorithm name, a number, or a field value. For example, the security algorithm includes a first encryption algorithm and/or a first integrity protection algorithm. Alternatively, for example, the security algorithm includes a first authenticated encryption algorithm.

In a possible implementation, the second node may send a message to the first node, where the message includes a first field, and a value of the first field may indicate the security algorithm of the first network. Table 1 provides a possible security algorithm information table. Four encryption algorithms may be included, and each algorithm corresponds to a segment of 4-bit data. For example, algorithm names may be example names ENC0, ENC1, ENC2, and ENC (which may be adaptively designed based on supported algorithms in a specific implementation process), and a value corresponding to an algorithm with an algorithm name "ENC0" is 0000. For other cases, refer to Table 1. Table 1 is used as an example. When the value of the first field is 0000, 0000 may be considered as the identifier of the security algorithm of the first network, and the value may indicate that the security algorithm used by the first network includes an encryption algorithm with an algorithm name "ENC0".

Similarly, the first field may include a plurality of fields, for example, a field 1 and a field 2. The field 1 indicates an encryption algorithm, and the field 2 indicates an integrity protection algorithm. For example, when a value of the field 1 is 000 and a value of the field 2 is 010, it indicates that the security algorithm of the first network includes an encryption algorithm with an algorithm name "ENC0" and an integrity protection algorithm with an algorithm name "INT1".

Similarly, when the value of the first field is 1000, it indicates that the security algorithm of the first network includes an authenticated encryption algorithm with an algorithm name "AUTH1".

**Table 1 Security algorithm information table**

| Algorithm type | Algorithm name | Value corresponding to an algorithm |
|---|---|---|
| Encryption algorithm | ENC0 | 0000 |
| | ENC1 | 0001 |
| | ENC2 | 0010 |
| | ENC3 | 0011 |
| Integrity protection algorithm | INT1 | 0100 |
| | INT2 | 0101 |
| | INT3 | 0110 |
| | INT4 | 0111 |
| Authenticated encryption algorithm | AUTH1 | 1000 |
| | AUTH2 | 1001 |
| | AUTH3 | 1010 |
| | AUTH4 | 1011 |

It should be understood that, in the algorithm information table shown in this application, the algorithm name, the value corresponding to the algorithm, and a quantity of algorithms included in each algorithm are merely examples.

Optionally, the identifier of the security algorithm of the first network may be included in the topology configuration message. Certainly, this application is also applicable to a case in which the identifier is sent via another message.

**In some possible implementations,** the security algorithm of the first network is preconfigured in the first node, for example, is configured in the first node by a grant node or a control node.

**In some possible implementations,** the first network may be created by the grant node. When a 1^{st} node that applies to join the first network joins the first network via the grant node, the security algorithm of the first network may be configured by the grant node, or may be determined through agreement between the grant node and a 1^{st} network access device. Optionally, the grant node may be the first node. The 1^{st} node that applies to join the first network may be the second node herein.

**In an example of an implementation,** the security algorithm of the first network is obtained through agreement between the first node and the second node. For example, the communication method further includes: receiving security capability information of the second node from the second node, where the security capability information of the second node indicates a security algorithm supported by the second node; and determining the security algorithm of the first network, where the security algorithm of the first network is a security algorithm supported by the second node and the first node. Further, the first node may provide an identifier of the determined security algorithm of the first network to the second node. This example is described by using an example in which the first node selects a first key agreement algorithm. In some scenarios, the second node may alternatively select the security algorithm of the first network based on security capability information of the first node.

Further, the foregoing implementation of determining the security algorithm of the first network through agreement between the first node and the second node may be implemented when a new node joins the first network for the first time. For example, when the first node is a unique node in the first network before the second node joins the first network, the first node and the second node agree on a session security key of the first network. For another example, the first node is the grant node, and the grant node may create the first network (in this case, the first node is the unique node in the first network). In this case, when a 1^{st} second node performs a procedure of joining the first network, the first node and the second node agree on the session security key of the first network.

**In a possible implementation, the method shown in** **FIG. 2** **may be implemented when the second node supports the security algorithm of the first network. In some solutions, the first node or the second node may determine, based on the identifier of the security algorithm used in the first network and the security capability of the second node, whether the second node supports the security algorithm of the first network.**

For the second node, if the second node does not support the security algorithm of the first network, the second node may choose to end the procedure of joining the first network, or may not join the first network; and may further indicate, to the first node, that joining the first network fails, for example, send indication code of a failure cause. If the second node supports the security algorithm of the first network, the second node continues the procedure of joining the first network. It should be noted that the second node may check, in any phase, whether the security algorithm of the first network is supported. For example, after receiving the identifier of the security algorithm of the first network, the second node checks whether the second node supports the security algorithm of the first network. If it is checked that the second node does not support the security algorithm of the first network, the current procedure of joining the first network is ended. For example, a message related to joining the first network may be transmitted to (for example, sent to and/or received from) the first node. For example, if the topology configuration message includes the identifier of the security algorithm of the first network, after receiving the topology configuration message, the second node may determine whether the second node supports the security algorithm of the first network. If the second node supports the security algorithm of the first network, some or all of subsequent steps S202 to S204 continue to be performed. Otherwise, the procedure may be ended, that is, some or all of steps S202 to S204 are not performed.

For the first node, the first node may receive the security capability information from the second node, where the security capability information of the second node indicates the security algorithm supported by the second node. If the second node does not support the security algorithm of the first network, the second message may be sent to the second node, where the second message indicates that joining the first network fails. Further, a procedure of adding the second node to the first network may be ended. For example, a message related to joining the first network may not be transmitted to (for example, sent to and/or received from) the second node.

On the contrary, if the second node supports the security algorithm of the first network, the first node continues to perform the procedure of adding the second node to the first network. For example, if the second node supports the security algorithm of the first network, subsequent steps are performed, where the subsequent steps herein include step S204. In other words, step S204 is performed when the second node supports the security algorithm of the first network.

It should be noted that, in step S201, the topology configuration message may not be specifically sent by the first node to the second node in a point-to-point manner. In some solutions, the first node may send the topology configuration message through broadcast or multicast. When the second node is within a range in which the topology configuration message can be received, the topology configuration message may be considered as being sent to the second node.

Step S202: The first node and the second node determine a first KDF through agreement.

The KDF can derive, from a segment of information, another segment of information. In some solutions, the KDF may receive a key (or another weak key material) as an input, and output a security key material based on a special function. During derivation, the KDF usually adds a parameter as an encryption factor, and the encryption factor is referred to as salt (Salt). In some solutions, the KDF may be implemented based on a hash function, and the hash function is, for example, a function like SHA1, SHA256, or SHA512. In some other solutions, the KDF may include one or more of the following algorithms: crypt (or a variant function thereof), a password-based key derivation function (password-based key derivation function, PBKDF), bcrypt (Blowfish crypt), scrypt, an Argon2 algorithm, and the like.

Table 2 is a KDF information diagram according to an embodiment of this application. For example, four KDFs may be included, the four KDFs are respectively referred to as KDF0, KDF1, KDF2, and KDF3 as examples, and values corresponding to the four KDFs may be shown in Table 2.

**Table 2 KDF information table**

| Algorithm type | Algorithm name | Value corresponding to an algorithm |
|---|---|---|
| KDF | KDF0 | 0000 |
| | KDF1 | 0001 |
| | KDF2 | 0010 |
| | KDF3 | 0011 |

Specifically, the first KDF is a KDF supported by the second node. The following describes several manners of determining the first KDF by using examples.

**Manner 1:** The first node may select the first KDF from a KDF supported by the second node, and indicate the selected first KDF to the second node. For example, the first node receives a KDF capability of the second node from the second node, and the KDF capability of the second node indicates the KDF supported by the second node. After determining the first KDF, the first node sends indication information of the first KDF to the second node.

Refer to Table 3. KDF capability information of the second node may indicate that the second node supports three KDFs: KDF0, KDF1, and KDF2. For example, the KDF capability information of the second node includes "KDF0, KDF1, and KDF2", or includes "0000, 0001, and 0010". The first node may select one (or more) of KDF0, KDF1, and KDF2 supported by the second node as a KDF used for subsequent verification, namely, the first KDF. Certainly, the name, the identifier, and the quantity of KDFs herein are merely examples. Optionally, the first node may select, from the KDF supported by the second node, a KDF with a highest priority as the first KDF.

**Table 3 KDF capability of a node**

| Node | Algorithm name | KDF number |
|---|---|---|
| KDF supported by the first node | KDF0 | 0000 |
| | KDF1 | 0001 |
| | KDF2 | 0010 |
| | KDF3 | 0011 |
| KDF supported by the second node | KDF0 | 0000 |
| | KDF1 | 0001 |
| | KDF2 | 0010 |

Further, the first KDF may also be a KDF supported by the first node. Because information verification needs to be performed subsequently based on the KDF, the first node also needs to support the KDF, to verify first information or generate a verification value of the first information. For example, the first KDF is a KDF with a highest priority in a KDF supported by both the first node and the second node.

Still refer to Table 3. The first node supports four KDFs: KDF0, KDF1, KDF2, and KDF3. The first node may select one (or more) of KDF0, KDF1, and KDF2 that are supported by both the first node and the second node as a KDF used for subsequent verification, namely, the first KDF.

In a possible implementation, the KDF capability of the second node is carried in a message sent by the second node to the first node, and is referred to as a first message for ease of differentiation. The indication information of the first KDF is carried in a message sent by the first node to the second node, and is referred to as the second message for ease of differentiation. Further, the first message and the second message belong to a message at a network layer, and the first message and the second message may be encapsulated in a next-layer entity during transmission. For example, the first message and the second message may be information transmitted when the first node and the second node establish a network layer connection.

**Manner 2:** The second node may select the first KDF from a KDF supported by both the second node and the first node, and indicate the selected first KDF to the second node. For example, the second node receives a KDF capability of the first node from the first node, to indicate, to the KDF capability of the first node, the KDF supported by the first node. With reference to Table 3, the first node may indicate, to the second node, that the first node supports four KDFs: KDF0, KDF1, KDF2, and KDF3. The second node may select one (or more) of KDF0, KDF1, and KDF2 supported by the first node as a KDF used for subsequent verification, namely, the first KDF. Further, the selected KDF may also be supported by the second node. Optionally, the second node may select, from the KDF supported by both the first node and the second node, a KDF with a highest priority as the first KDF.

In some scenarios, if the first node and the second node do not jointly support a KDF, the first node or the second node may end the procedure, for example, no longer perform a subsequent procedure, discard a received message, or disconnect a link.

Step S203: The first node and the second node verify the first information based on the first KDF.

The first information may include information transmitted between the first node and the second node, for example, information included in the topology configuration message and/or one or more types of information transmitted before the verification action is performed, for example, information included in the first message and information included in the second message. Optionally, the first information may include all information in the transmitted message, or may include only some information in the transmitted message. For example, the first information includes the information included in the topology configuration message. The topology configuration message may include a plurality of pieces of information. During verification, some information in the topology configuration message, the topology type of the first network, or the identifier of the security algorithm of the first network may be verified. Alternatively, optionally, during verification, all messages in the topology configuration message may be verified, in other words, information included in the entire topology configuration message is verified.

Further, the first information may further include a parameter, a key, and the like that are predetermined between the first node and the second node. For example, the first information may include one or more of a first key, an encryption key derived based on the first key, an authenticated encryption key derived based on the first key, an integrity protection key derived based on the first key, or a first parameter.

In some scenarios, when the first information is successfully verified, the first node or the second node continues to perform the procedure of adding the second node to the first network, for example, subsequent step S204. When the first information fails to be verified, the first node or the second node may interrupt or end the procedure of adding the second node to the first network, for example, may not perform step S204.

The following describes several possible implementations of verifying the first information by using examples.

Implementation 1: The second node generates a first verification value based on the first information, and sends the first verification value to the first node, and the first node performs verification. The first information includes information that is received by the second node or sent to the first node before the first verification value is generated, for example, information in the topology configuration message, or the KDF capability of the second node, or a key agreement algorithm capability of the second node. Alternatively, optionally, the first information includes information shared by the first node and the second node before the first verification value is generated, for example, a parameter preconfigured in the first node and the second node, the first key obtained through agreement between the first node and the second node, or the session security key (that is, one or more of the encryption key, the integrity protection key, and the authenticated encryption key) derived from the first key.

In a possible implementation, the first verification value is associated with the first KDF and one or more of the following information: the first parameter, the first key, the information included in the first message, the information included in the second message, and the information included in the topology configuration message. The first parameter is a parameter predefined by the first node and the second node, and a value of the first parameter may be fixed, or may change. The first key is a key pre-shared by the first node and the second node, for example, a key obtained through agreement, a preset key, or a key derived from an originally shared key. The topology configuration message may include the information about the first network, the identifier of the security algorithm of the first network, and the like. The second message includes a first public key (optional), a first random number (optional), a selected key agreement algorithm (optional), a selected KDF (considered as the indication information of the first KDF), and the like.

The foregoing implementations provide a plurality of possible cases. The following describes several possible designs by using examples.

Design 1: The second node may generate the first verification value based on the first KDF, the first key, the information included in the second message, and the information included in the topology configuration message, and send the first verification value to the first node. Further, the first node may verify the first verification value based on a same parameter and the first KDF. For example, the first node may obtain a first test value based on the first KDF and the same parameter, and compare whether the first test value is the same as the first verification value. If the first test value is the same as the first verification value, it indicates that the first verification value is successfully verified. Otherwise, it indicates that verification fails.

For example, the first verification value may satisfy the following formula: First verification value=KDF (DH key, second message content, topology configuration message content). The KDF is a KDF determined through agreement between the first node and the second node, the DH key represents a key (considered as the first key) predetermined between the first node and the second node, second message content=first random number||first public key||selected key agreement algorithm||selected key derivation function, and topology configuration message content=encryption algorithm||integrity protection algorithm. It should be understood that "||" represents an information connection or concatenation. For example, if the first random number is 0x11111111, and the first public key is 0x00000000, the first random number||the first public key is 0x1111111100000000.

Design 2: The second node may generate the first verification value based on the first KDF, the first parameter, the information included in the second message, and the information included in the topology configuration message, and send the first verification value to the first node. Further, the first node may verify the first verification value based on a same parameter and the first KDF.

For example, the first verification value may satisfy the following formula: First verification value=KDF (ZERO, second message content, topology configuration message content). The KDF is a KDF determined through agreement between the first node and the second node, ZERO represents N bits of 0, for example, 128 bits are all 0, second message content=selected key derivation function, and topology configuration message content=encryption algorithm||integrity protection algorithm.

It should be noted that, in a specific implementation process, more or fewer parameters may participate in generating the first verification value. Design 1 is used as an example. The second message content may be obtained by concatenating only some information in the second message. For another example, the first public key, the selected key agreement algorithm, and the like are information in a key agreement scenario. In some implementation processes, the first node and the second node do not agree on a key. In this case, parameters such as the first public key and the selected key agreement algorithm do not participate in generating the first verification value.

Design 3: The first verification value is related to the first key and the information included in the topology configuration message. For example, the first verification value may be represented as first verification value=KDF (DH key, topology configuration message content). Similarly, the first verification value is related to the first key and the information included in the topology configuration message. For example, the first verification value may be represented as first verification value=KDF (DH key, second message content).

Design 4: The first verification value is related to the first parameter and the information included in the topology configuration message. For example, the first verification value may be represented as first verification value=KDF (ZERO, topology configuration message content).

The foregoing four designs are merely examples for describing operations related to the first verification value. In a specific implementation process, more information may participate in generating the first verification value. For example, the KDF may further receive an algorithm indication, to indicate a function used internally. In addition, the parameter sequence, the representation manner (for example, KDF () represents the KDF algorithm), and the like are merely examples, and are not intended to limit a specific implementation.

**In a possible implementation,** the first verification value is carried in a third message sent by the second node to the first node. Further, the third message is later than the first message. The first random number may be carried in a message sent by the first node to the second node, for example, the second message, where the second message is earlier than the third message.

Implementation 2: The first node generates a second verification value based on the first information, and sends the second verification value to the second node, and the second node performs verification.

In a possible implementation, the second verification value is associated with the first KDF and one or more of the following information: the first parameter, the first key, the information included in the first message, the information included in the second message, information included in the third message, and the information included in the topology configuration message. The first message may include one or more of a KDF capability, a key agreement algorithm capability, and the like. The third message may include one or more of the information such as a second public key, a second random number, and the first verification value.

The following lists several possible examples.

Example 1: The first node may generate the second verification value based on the first KDF, the first key, the information included in the first message, the information included in the third message, and the information included in the topology configuration message, and send the second verification value to the second node. Further, the second node may verify the second verification value based on a same parameter and the first KDF. For example, the second node may obtain a second test value based on the first KDF and the same parameter, and compare whether the second test value is the same as the second verification value. If the second test value is the same as the second verification value, it indicates that the second verification value is successfully verified. Otherwise, it indicates that verification fails.

For example, the second verification value may satisfy the following formula: Second verification value=KDF (DH key, third message content, first message content, topology configuration message content). The KDF is a KDF determined through agreement between the first node and the second node, the DH key represents a key (considered as the first key) predetermined between the first node and the second node, third message content=second random number||second public key||first verification value, first message content=key agreement algorithm capability||key derivation function capability, and topology configuration message content=encryption algorithm||integrity protection algorithm.

Example 2: The first node may generate the second verification value based on the first KDF, the first parameter, the information included in the first message, the information included in the third message, and the information included in the topology configuration message, and send the second verification value to the second node. Further, the second node may verify the first verification value based on a same parameter and the first KDF.

For example, the second verification value may satisfy the following formula: Second verification value=KDF (ZERO, third message content, first message content, topology configuration message content). The KDF is a KDF determined through agreement between the first node and the second node, ZERO represents N bits of 0, for example, 128 bits are all 0, third message content=second random number||second public key||first verification value, first message content=key agreement algorithm capability||key derivation function capability, and topology configuration message content=encryption algorithm||integrity protection algorithm.

It should be noted that, in a specific implementation process, more or fewer parameters may participate in generating the second verification value.

Example 3: The second verification value is related to the first key, the information included in the third message, the first key, and the information included in the topology configuration message. For example, the second verification value may be represented as second verification value=KDF (DH key, third message content, topology configuration message content).

Example 4: The second verification value is related to the first parameter, the information included in the third message, and the information included in the topology configuration message. For example, the second verification value may be represented as second verification value=KDF (ZERO, third message content, topology configuration message content).

Example 5: The second verification value is related to the first key and the information included in the topology configuration message. For example, the second verification value may be represented as second verification value=KDF (DH key, third message content, topology configuration message content).

Example 6: The second verification value is related to the first parameter and the information included in the topology configuration message. For example, the second verification value may be represented as second verification value=KDF (ZERO, third message content, topology configuration message content).

**In another possible implementation,** security protection is performed in a process of verifying the first information by the first node and the second node based on the first KDF, to further improve security. For example, security protection may be performed on the first verification value and/or the second verification value. The first verification value is used as an example. In an example, the first verification value is encrypted in a transmission process. For example, a message carrying the first verification value is encrypted at an access layer. For another example, the first verification value (or a message carrying the first verification value) may be encrypted based on a key to form ciphertext, and the second node may send the ciphertext. In another example, a parameter participating in generating the first verification value includes a key, so that the first verification value is not easily cracked.

Step S204: The first node sends the network key of the first network to the second node through encryption. Correspondingly, the second node receives the network key of the first network from the first node.

Optionally, the network key NetKey of the first network may also be encrypted in the following manner: NetKey is carried in a message, and the first node encrypts the entire message based on the encryption key.

The network key of the first network is used to perform security protection on a message between nodes in the first network, for example, used for one or more of encryption, integrity protection, or authenticated encryption. Herein, the network key of the first network is directly used for encryption, integrity protection, or authenticated encryption, or the like. Alternatively, an encryption key, an integrity protection key, an authenticated encryption key, or the like may be first derived from the network key of the first network, and then security protection is performed on the message based on these derived keys. For example, the encryption key Kenc may be derived in the following manner: Kenc=KDF (NetKey, algorithm identifier, "enc"), where NetKey is the network key of the first network, the algorithm identifier indicates a KDF algorithm used for derivation, "enc" may be considered as salt of the KDF, and the identifier is related to the encryption key, so that a peer device can also derive a consistent encryption key based on the same salt. Similarly, the integrity protection key Kint may be derived in the following manner: Kint=KDF (NetKey, algorithm identifier, "int"), where the algorithm identifier indicates a KDF algorithm used for derivation (which may be different from or the same as an algorithm for deriving an encryption key), and "int" may be considered as salt of the KDF. Similarly, the authenticated encryption key Kac may be derived in the following manner: Kac=KDF (NetKey, algorithm identifier, "auth enc"), where the algorithm identifier indicates a KDF algorithm used for derivation, and "auth enc" may be considered as salt of the KDF. It should be noted that the encryption key Kenc, the integrity protection key Kint, the integrity protection key Kint, and the like may be used to perform security protection on a message in the first network.

In a possible implementation, the first node may further send an ID of the network key of the first network to the second node. Optionally, the network key of the first network may be a number, a character string, or the like. Alternatively, optionally, the ID of the network key of the first network may be derived based on the network key of the first network. In some solutions, the ID of the network key of the first network and the network key of the first network may be carried in a same message.

For example, after the network key of the first network is sent to the second node, the first node and the second node may perform security protection on a network layer between the first node and the second node based on the network key of the first network.

The following lists two implementations in which the first node sends the network key of the first network through encryption.

**Implementation 1:** When a message is encrypted at an access layer, the first node encrypts the network key of the first network based on an access layer encryption mechanism for sending. Specifically, the first node sends a fourth message to the second node, where the fourth message includes the network key of the first network, and the fourth message is encrypted at the access layer. In this case, when the first node and the second node first establish an access layer connection and access layer encryption is enabled, a message carrying the network key of the first network layer may be encrypted at an access layer of the first node during transmission. Therefore, the message carrying the network key of the first network is encrypted at the access layer. Correspondingly, when the second node receives the fourth message, the fourth message may be decrypted at an access layer of the second node, to obtain the network key of the first network.

**Implementation 2:** The first node and the second node may encrypt the network key of the first network based on a key shared in advance (for example, before the key is transmitted), to obtain ciphertext. During transmission, the first node sends the ciphertext of the network key of the first network to the second node. Correspondingly, the second node may obtain the ciphertext, and decrypt the ciphertext based on the shared key, to obtain the network key of the first network.

It should be understood that the foregoing two encrypted sending manners are merely examples, and another manner of sending the network key of the first network through encryption may be included in a specific implementation process. In addition, the foregoing two manners may be combined when they are not mutually exclusive. For example, after the first node and the second node establish the access layer connection, if the access layer connection is not enabled, the network key of the first network is encrypted based on the key to obtain the ciphertext, to implement encrypted transmission of the network key of the first network. For example, if the access layer connection is not enabled, a key is obtained through exchange based on a key agreement algorithm, and the network key of the first network is encrypted (directly or indirectly) based on the key. If the access layer connection is enabled, the network key of the first network is encrypted based on the access layer encryption mechanism for sending.

In a possible implementation, the shared key may be a key obtained through agreement between the first node and the second node, or the shared key may be a key derived based on a key obtained through agreement between the first node and the second node.

**The following first describes a process of obtaining a key through agreement between the first node and the second node.** In some solutions, the first node may determine the first key through agreement with the second node based on the first key agreement algorithm. The first key is used to perform security protection on information transmitted between the first node and the second node. Optionally, the first key may be directly used for information encryption in a communication process. Alternatively, optionally, the first key may be used to derive another key, and a key derived from the first key may be used for information encryption in a communication process.

The first key agreement algorithm is an algorithm supported by both the first node and the second node. An example process of obtaining the first key through agreement is as follows: The first node and the second node determine respective private keys. The first node determines a first public key based on the private key of the first node and a public key determined based on the first key agreement algorithm, and provides the first public key to the second node. The second node determines a second public key based on the private key of the second node and a public key determined based on the first key agreement algorithm, and provides the second public key to the first node. The first node determines a key based on the private key of the first node and the second public key, and the key is referred to as a DH key for ease of differentiation. The second node determines a DH key based on the private key of the second node and the first public key. If the exchanged public keys are not tampered with, the DH keys determined by the second node and the first node are consistent. Optionally, the first public key may be carried in the second message, and the second public key may be carried in the first message or the third message.

Optionally, the DH key may participate in generating the verification value, that is, the DH key may be the first key. Herein, the DH key is directly used as an input of the first KDF, or another secret value is calculated based on the DH key and then used as an input of the first KDF.

**Further, the DH key is used to derive another key,** and the another key includes but is not limited to an encryption key, an integrity protection key, and an integrity protection key. For example, encryption key=KDF (DH key, algorithm identifier, encryption key identifier), where the algorithm identifier indicates an algorithm used in the KDF (or is used to specify a specific KDF), and the encryption key identifier is used to identify that the derived key is an encryption key. For example, the encryption key identifier is "enc". Similarly, integrity protection key==KDF (DH key, algorithm identifier, integrity protection key identifier), and the integrity protection key identifier is, for example, "int". Similarly, authenticated encryption protection key=KDF (DH key, algorithm identifier, authenticated encryption protection key identifier), and the authenticated encryption protection key identifier is, for example, "auth enc".

For example, the encryption key may be used to encrypt the network key of the first network. Further, integrity protection may further be performed on the message carrying the network key of the first network based on the integrity protection key. For another example, the authenticated encryption key may be used to encrypt the network key of the first network, and integrity protection may be performed on the network key of the first network.

**In a possible implementation, the first key agreement algorithm used by the first node and the second node in the DH key agreement process may also be obtained through agreement. The following lists two manners of determining the first key agreement algorithm.**

Manner 1: The first node notifies the second node of a key agreement algorithm supported by the first node, and the first node selects a key agreement algorithm used for key agreement, that is, determines the first key agreement algorithm. Specifically, the first node sends a key agreement algorithm capability of the first node to the second node, where the key agreement algorithm capability of the first node indicates the key agreement algorithm supported by the first node. The first node receives indication information, sent by the second node, of the first key agreement algorithm. With reference to Table 4, the second node may select one (or more) of the three key agreement algorithms KE0, KE1, and KE2 supported by both the first node and the second node as the first key agreement algorithm.

**Table 4 KDF capability of a node**

| Node | Algorithm name | KDF number |
|---|---|---|
| key agreement algorithm supported by the first node | KE0 | 0000 |
| | KE1 | 0001 |
| | KE2 | 0010 |
| | KE3 | 0011 |
| key agreement algorithm supported by the second node | KE0 | 0000 |
| | KE1 | 0001 |
| | KE2 | 0010 |

Optionally, a message transmitted during key agreement algorithm agreement may be a same message as the foregoing message carrying another parameter. In this way, signaling overheads can be reduced. For example, the key agreement algorithm capability of the second node is included in the first message, and the indication information of the first key agreement algorithm is included in the second message.

Manner 2: The second node notifies the first node of a key agreement algorithm supported by the second node, and the second node selects a key agreement algorithm used for key agreement. Specifically, the second node sends the key agreement algorithm capability of the first node to the first node, where the key agreement algorithm capability of the second node indicates the key agreement algorithm supported by the second node. The second node receives indication information, sent by the first node, of the first key agreement algorithm. With reference to Table 4, the second node may select one (or more) of the three key agreement algorithms KE0, KE1, and KE2 supported by both the first node and the second node as the first key agreement algorithm.

In a possible implementation, before the first node sends the network key to the second node through encryption, the first node may receive a request message from the second node, where the request message indicates to request the network key of the first network. Correspondingly, the first node may send the network key to the second node through encryption in response to the request message.

Further, after the first node sends the network key of the first network to the second node, the second node may send a network key configuration complete message to the first node to indicate that key configuration is completed. Further, the first node and the second node may start a wireless adjacency protocol.

In the embodiment shown in FIG. 2, in a process in which the second node joins the first network, the first node that is already in the first network may send the network key of the first network to the second node in an encrypted sending manner, so that the network key is securely distributed. The second node may also securely transmit information in the first network based on the network key.

Further, before sending the key through encryption, the first node may send the topology configuration message to the second node, where the information about the first network included in the topology configuration message mainly includes some attribute information of the network. The first node and the second node may obtain the KDF through agreement, and verify, based on the KDF, that the information included in the topology configuration message is not tampered with, to determine that a communication environment between the first node and the second node is secure. In this process, the first node and the second node obtain the first KDF through agreement. This can adapt to a case in which a plurality of nodes with different security capabilities join the network, so that the network can be applied to a scenario in which different types of devices are used, thereby improving network inclusiveness.

The access layer connection is mentioned in the foregoing solution. The following describes two signaling procedures for establishing the access layer connection. Optionally, the procedure for establishing the access layer connection may also be referred to as an access procedure or an association procedure. Specifically, association is a process in which two nodes obtain a consistent communication key and establish a connection. The following uses a procedure in which a terminal node accesses a grant node as an example for description. The grant node is a first node or a second node. Correspondingly, the terminal node may be the second node or the first node.

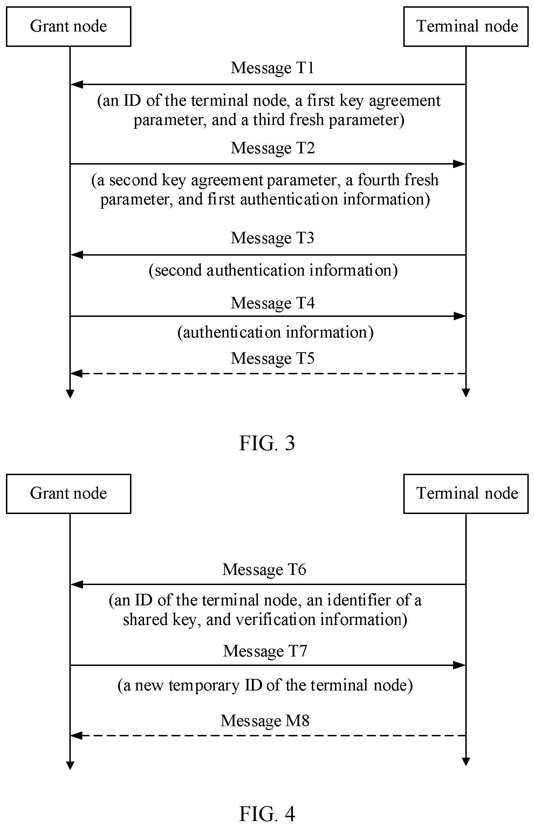

FIG. 3 is a diagram of an association procedure without security context, including an authentication procedure and a security context procedure. For ease of differentiation, messages (or referred to as information) exchanged in the association process are respectively represented as T1 to T5 below. Before the association procedure, there is no security context in the terminal node and the grant node, and no session key is obtained through agreement, and no security context is provided. During association, the terminal node sends a message T1, where the message T1 includes an ID of the terminal node, a first key agreement parameter, and a third fresh parameter. The grant node determines a second key agreement parameter and a fourth fresh parameter, and determines a first key based on the first key agreement parameter and the second key agreement parameter. Further, the grant node may determine a second key (for example, a key Kgt) based on the first key (for example, a key K_{KE}), the third fresh parameter, and the fourth fresh parameter. Optionally, the grant node may derive a session key from the second key (or the first key), to perform security protection on a message. The grant node provides the second key agreement parameter and the fourth fresh parameter to the terminal node via a message T2. Optionally, the message T2 carries authentication information (that is, first authentication information), to verify a key, an identity, or message integrity. The terminal node obtains a first key or a second key in a same manner. Further, the terminal node also derives a session key from the second key (or the first key), to perform security protection on a subsequent message. In this way, the terminal node and the grant node obtain a consistent key through agreement. The terminal node may further generate second authentication information, and include the second authentication information in the message T3 for sending to the grant node. The grant node verifies the second authentication information. If verification succeeds, the grant node sends a message T4 to the terminal node, to complete association. Optionally, the terminal node responds with a message T5, to indicate that association is completed.

It should be understood that, in a specific implementation process, more messages may be exchanged in the association procedure, or more or fewer parameters may be carried in the messages. For example, the third fresh parameter and the fourth fresh parameter may not be carried, and the second key may be obtained based on the first key and a counter when the second key is obtained. For another example, the first authentication information or the second authentication information may not be carried. For another example, optionally, the message T1 may further carry one or more of a security capability of the terminal node (indicating a security algorithm supported by the terminal node), indication information of a key agreement algorithm, and the like. For another example, the message T2 may further carry a length of the authentication information, a length of the session key, an ID of the second key (or an ID of the first key), indication information of a security algorithm, and the like. For another example, the message T4 may further carry one or more of a temporary ID allocated by the terminal node to the grant node, a validity period of the second key, a validity period of the first key, and the like. When the terminal node belongs to a communication group, the grant node may further include one or more of a group key of the communication group, an ID of the group key, a group security algorithm, a validity period of the group key, and the like in the message T4.

The security context mentioned above is a group of information, for example, one or more of a key, a fresh parameter, a key agreement parameter, information about a security algorithm, and an identity of a terminal, included in a communication security-related parameter. The information about the security algorithm includes one or more of indication information of the security algorithm, a version of the security algorithm, and the like.

For example, one type of security context may include one or more of the following information: a fixed ID of the terminal node, a temporary ID of the terminal node, a shared key (for example, represented as Kgt), a validity period of the shared key, an identifier of the shared key (for example, Kgt ID), indication information of a key agreement algorithm, indication information of a signaling plane encryption algorithm, indication information of a signaling plane integrity protection algorithm, a signaling plane encryption key, a signaling plane integrity protection key, indication information of a user plane encryption algorithm, indication information of a user plane integrity protection algorithm, indication information of a user plane authenticated encryption algorithm, a user plane encryption key, a user plane integrity protection key, a user plane authenticated encryption key, a key derivation counter (counter), COUNTERg, a global frame number (Global Frame Number, GFN), a group key (for example, represented as GK), an identifier of the GK (GK ID), a group algorithm (Galgorithm), a validity period of the group key (GK expiration), and a group global frame number (Group Global Frame Number, GGFN).

FIG. 4 is a diagram of an association procedure with security context. For ease of differentiation, messages (or information) are respectively represented as T6 to T8 below. Before the association procedure, the grant node obtains the security context of the terminal node. For content of the association context, refer to the foregoing descriptions. During association, the terminal node sends a message T7 to the grant node, where the message T7 carries an identity (optionally a temporary identity or a fixed identity) of the terminal node, and optionally carries a Kgt ID. Optionally, integrity protection may be performed on the message T7 based on an integrity protection key.

The grant node obtains, based on the identity of the terminal node, an integrity protection key shared with the terminal node, and checks integrity of an association message based on the integrity protection key. When successfully checking the integrity of the association request message, the grant node sends a message T7, and association is established between the grant node and the terminal node. Optionally, when the grant node successfully checks the integrity of the association request message, the grant node may further allocate a temporary ID to the terminal node. In this case, the message T7 may carry the temporary ID allocated by the grant node to the terminal node.

It may be understood that the integrity protection key may be included in the security context, and "checking integrity of an association message based on the integrity protection key" may also be replaced with "checking the integrity of the association message based on the security context". Further, the security context may include indication information of an integrity protection algorithm and an integrity protection key. The grant node may check integrity of the message T6 based on the integrity protection key and a specified integrity protection algorithm. Optionally, the integrity protection key herein may be a signaling plane integrity protection algorithm.

Further, the grant node performs integrity protection on the message T7 based on the signaling plane integrity protection algorithm and a signaling plane integrity protection key Ks.int. Optionally, when signaling plane encryption protection is enabled, the grant node may further perform encryption protection on the message T7 based on a signaling plane encryption algorithm and a signaling plane encryption key Ks.enc.

Optionally, the terminal node responds with a message T8, to indicate that association is completed. In some scenarios, if the message T7 is encrypted, the terminal node decrypts the message T7. If integrity protection is performed on the message T7, the terminal node verifies integrity of the message T7. If integrity verification succeeds, association is completed, and the terminal node may send the message T8 to the grant node.

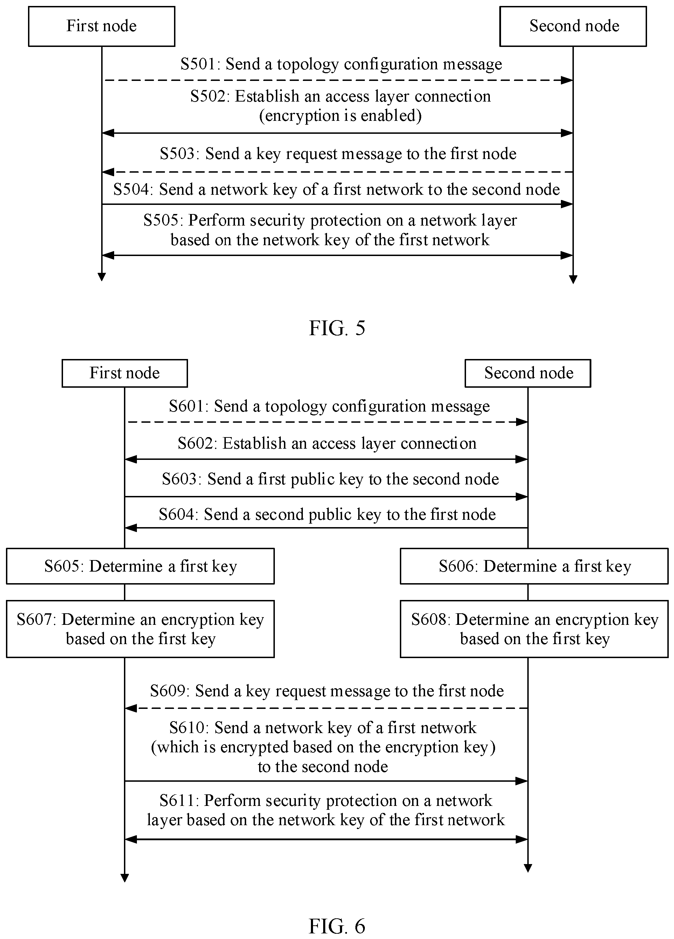

The embodiment shown in FIG. 2 provides a plurality of possible solutions. The following describes some possible designs with reference to FIG. 5, FIG. 6, FIG. 7, FIG. 8, or FIG. 9 by using examples. It should be understood that, for logic, terms, and the like in an embodiment shown in FIG. 5, FIG. 6, FIG. 7, FIG. 8, or FIG. 9, refer to the foregoing descriptions. In addition, in some figures of this application, information indicated by a message is described in accompanying drawings by using brackets. However, this does not represent a strict limitation on message content. For example, although a topology configuration message shown in FIG. 5 is shown as a security algorithm, in a specific implementation process, the topology configuration message may carry an identifier of the security algorithm. In the following, a first node is a node already in a first network, and is referred to as an in-network device in some solutions. A second node is a node that needs to join the first network, and is referred to as a network access device in some scenarios. The first network may be a mesh network. Certainly, this application is also applicable to a case in which the first network is a network of another topology type.

In a possible design, when sending a network key, the first node encrypts the network key based on an access layer encryption mechanism. FIG. 5 is a schematic flowchart of another communication method according to an embodiment of this application. The communication method may include step S502, step S504, and step S505, and may further include step S501 and/or step S503. Step S501 and step S502 are specifically as follows.

Step S501: The first node sends the topology configuration message. Correspondingly, the second node may receive the topology configuration message from the first node.

The topology configuration message may include information about the first network. For example, the topology configuration message may include the information about the first network. For another example, the topology configuration information may further indicate a security algorithm used by the first network. For example, the topology configuration message includes an encryption algorithm and an integrity protection algorithm that are used by the first network. Alternatively, the topology configuration message includes an authenticated encryption algorithm used by the first network.

Step S502: The first node and the second node establish an access layer connection.

For example, the first node and the second node are connected by using the procedure shown in FIG. 3 or FIG. 4, and encryption of the access layer connection between the first node and the second node may be enabled.

Step S503: The second node sends a key request message to the first node. Correspondingly, the first node receives the key request message from the second node.

The key request message includes indication information indicating a network key of the first network.

Step S504: The first node sends the network key of the first network to the second node. Correspondingly, the second node receives the network key of the first network.

Specifically, the first node includes the network key of the first network in a fourth message, where the fourth message is encrypted at an access layer. Correspondingly, when receiving the fourth message at the access layer, the second node may decrypt the fourth message based on a key at the access layer, to obtain the network key of the first network.

Optionally, before sending, the first node determines the first network that the first node joins, and determines the network key of the first network.

Step S505: The first node and the second node perform security protection on a network layer based on the network key of the first network.

In the embodiment shown in FIG. 5, the first node secretly transmits the network key of the first network based on the access layer encryption mechanism, thereby improving security of the network key of the first network. The network key of the first network is used for security protection of the network layer, thereby improving security of information transmitted at the network layer between nodes.

In another possible design, the first node and the second node may obtain a first key through agreement, and derive an encryption key from the first key. In a process of sending a network key to the second node, the first node may encrypt the network key based on the encryption key. Correspondingly, the second node may obtain the network key through decryption based on the encryption key.

FIG. 6 is a schematic flowchart of another communication method according to an embodiment of this application. The communication method may include step S602 to step S608, step S610, and step S611, and may further include step S601 and/or step S609. Step S601 to step S509 are specifically as follows.

Step S601: The first node sends a topology configuration message. Correspondingly, the second node receives the topology configuration message.

Step S602: The first node and the second node establish an access layer connection.

Optionally, encryption of the access layer connection between the first node and the second node may be enabled, so that security of network key distribution can be further improved. Alternatively, encryption of the access layer connection between the first node and the second node is not enabled. In this case, the first node may subsequently encrypt the network key based on the encryption key derived from the first key, for sending.

Step S603: The first node sends a first public key to the second node. Correspondingly, the second node receives the first public key from the first node.

Specifically, the first node generates a first private key, generates the corresponding first public key based on a first key agreement algorithm, and sends the first public key to the second node. Optionally, the first key agreement algorithm may be selected by the first node or the second node.

Step S604: The second node sends a second public key to the first node. Correspondingly, the first node receives the second public key from the second node.

Specifically, the second node generates a second private key, generates the corresponding second public key based on the first key agreement algorithm, and sends the second public key to the first node.

Step S605: The first node determines a first key.

Specifically, the first node determines the first key based on the first private key, the second public key, and the first key agreement algorithm.

Step S606: The second node determines a first key.

Specifically, the second node determines the first key based on the first private key, the second public key, and the first key agreement algorithm.

Step S607: The first node determines an encryption key based on the first key.

Specifically, the first node derives another key, for example, the encryption key, based on the first key. Further, the first node may further derive an integrity protection key from the first key.

Step S608: The second node determines an encryption key based on the first key.

Refer to step S607.

Step S609: The second node sends a key request message to the first node. Correspondingly, the first node receives the key request message from the second node.

Step S610: The first node sends the network key of a first network to the second node.

Specifically, the first node determines the network key NetKey of the first network that the first node joins. When the network key of the first network is sent, the network key is encrypted based on the encryption key for sending.

For example, the first node may encrypt the network key NetKey of the first network based on the encryption key, to obtain ciphertext of NetKey, and send the ciphertext to the second node. Correspondingly, the second node may decrypt the ciphertext based on the encryption key, to obtain the network key NetKey of the first network.

It should be understood that, in a specific implementation process, the network key NetKey of the first network may also be encrypted in the following manner: NetKey is carried in a fourth message, and the first node encrypts the fourth message based on the encryption key.

Step S611: The first node and the second node perform security protection on a network layer based on the network key of the first network.

In the embodiment shown in FIG. 6, the first node and the second node obtain the first key through agreement, and derive the encryption key based on the first key, to secretly transmit the network key of the first network, thereby improving privacy of the network key of the first network. The network key of the first network is used for security protection of the network layer, thereby improving security of information transmitted at the network layer between nodes.

Further, the key agreement algorithm used during key agreement may also be obtained through agreement, so that the method is applicable to nodes having different key agreement capabilities, thereby improving a capability of the network to accommodate a plurality of types of nodes, and enhancing network availability.

In some possible implementations, before transmitting a key of a first network, the first node may verify information shared by the first node and the second node (for example, previously transmitted information or predefined information). When the shared information is not tampered with, the first node sends the network key of the first network to the second node, thereby improving privacy of the network key of the first network and improving communication security of the node.

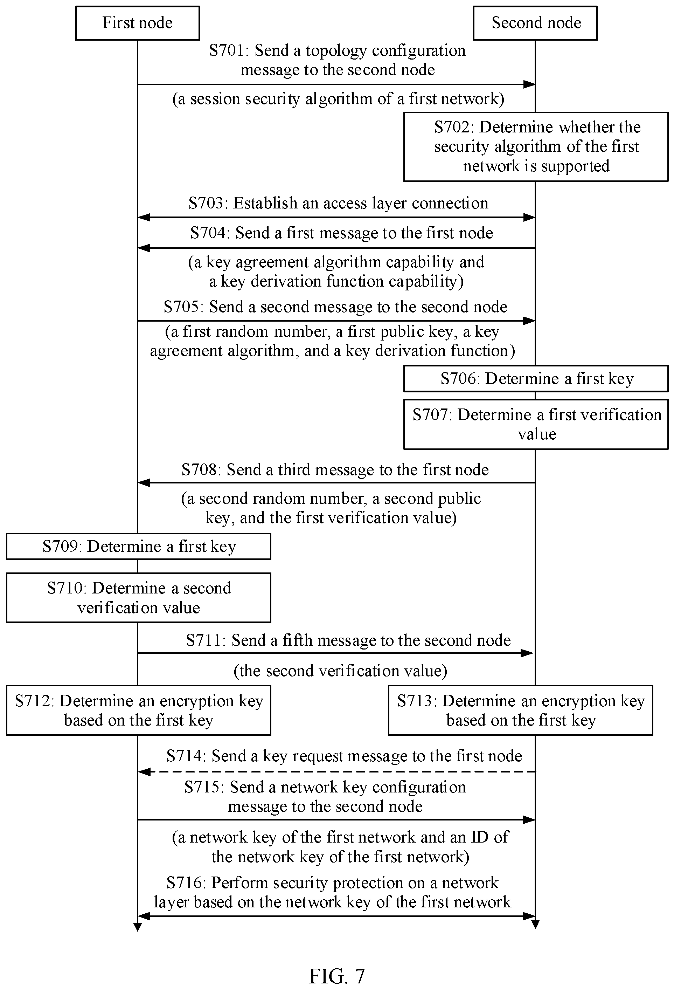

FIG. 7 is a schematic flowchart of another communication method according to an embodiment of this application. The communication method may include some or all of steps S701 to S716. It should be understood that the following uses only a sequence of steps S701 to S716 as an example for description. In a specific implementation process, occasions for performing some steps may be changed. Steps S701 to S716 are specifically as follows.

Step S701: The first node sends a topology configuration message.

Specifically, the first node may include, in the topology configuration message, information indicating a security algorithm used by the first network. For example, the topology configuration message includes an encryption algorithm and an integrity protection algorithm that are used by the first network. Alternatively, the topology configuration message includes an authenticated encryption algorithm used by the first network.

In some possible solutions, when a 1^{st} network access device joins the first network via a mesh grant node, the security algorithm of the first network is configured by the grant node, or is determined through agreement between the grant node and the 1^{st} network access device.

It may be understood that the first node sends the topology configuration message, and correspondingly, the second node may receive the topology configuration message from the first node.

Step S702: The second node determines whether the security algorithm of the first network is supported.

The security algorithm of the first network is a security algorithm indicated by the first node in the topology configuration message.

If the second node supports the security algorithm sent by the first node, a subsequent procedure is performed. If the second node does not support the security algorithm sent by the first node, a process ends, that is, a subsequent procedure is not performed.

Step S703: The first node and the second node establish an access layer connection.

For example, the first node is connected to the second node by using the procedure shown in FIG. 3 or FIG. 4.

Optionally, encryption of the access layer connection between the first node and the second node may be enabled, so that security of network key distribution can be further improved. Alternatively, encryption of the access layer connection between the first node and the second node is not enabled. In this case, the first node may subsequently encrypt the network key based on the encryption key derived from the first key, for sending.

Step S704: The second node sends a first message to the first node.

The first message carries a key agreement algorithm capability and a key derivation function capability. The key agreement algorithm capability indicates a key agreement algorithm supported by the second node, and the key derivation function capability indicates a key derivation function supported by the second node.

It should be understood that names of messages in this specification are merely used to distinguish between different messages. In a specific implementation process, the names of the messages may be designed in another manner. For example, the first message may be referred to as a security request message, or the first message may be a handshake message or a hello message of a network layer connection.

It may be understood that the second node sends the first message to the first node, and correspondingly, the first node receives the first message from the second node.

In a possible implementation, the first node selects, based on the key agreement algorithm capability and the key derivation function capability of the second node, a key agreement algorithm and a key derivation function that have a highest priority. Certainly, in some solutions, the key agreement algorithm and the key derivation function selected by the second node are also a key agreement algorithm and a key derivation function that are supported by the first node.

Further, the first node may generate a first private key, and generate a first public key based on the selected key agreement algorithm. Optionally, the first node may further generate a first random number.

Step S705: The first node sends a second message to the second node.

The second message carries the first public key, and the second message further indicates the key agreement algorithm selected by the first node and the key derivation function selected by the first node. It should be understood that a name of the second message may be designed in another manner. For example, the first message may be referred to as a security response message, or the second message may be a handshake message or a hello message of the network layer connection.

Further, when the first node generates the first random number, the first random number is carried in the second message to be sent to the second node.

It may be understood that the first node sends the second message to the second node, and correspondingly, the second node may receive the second message from the first node.

Step S706: The second node determines a first key.

For example, the second node may generate a second private key, and calculate the first key based on the key agreement algorithm selected by the first node, the second private key, and the first public key. Optionally, the first key may also be referred to as an agreement key, a DH key, or the like.

Step S707: The second node determines a first verification value.

In a possible implementation, first verification value=KDF (DH key, second message content, topology configuration message content). The DH key is the first key determined in step S506, and the KDF used to generate the first verification value is the KDF selected by the first node.

In addition, the second message content includes some or all information in the second message, or the second message content includes information obtained by processing some or all information in the second message. For example, when the second message includes the first random number, the first public key, the selected key agreement algorithm, and the selected key derivation function, second message content=first random number||first public key||selected key agreement algorithm||selected key derivation function.

Similarly, the topology configuration message content includes some or all information in the topology configuration message, or the topology configuration message content includes information obtained by processing some or all information in the topology configuration message.

In another possible implementation, first verification value=KDF (DH key, first random number, topology configuration message content).

Step S708: The second node sends a third message to the first node.

The third message carries a second public key and the first verification value. The second public key may be determined by the second node based on the second private key. Specifically, the second node generates the second private key, and generates the corresponding second public key based on the selected key agreement algorithm. Further, the second node further generates a second random number, and the second random number is carried in the third message to be sent to the second node.

It should be understood that a name of the third message may be designed in another manner. For example, the third message may be referred to as a security verification request message, or the third message may be a handshake message or a hello message of the network layer connection.

It may be understood that the second node sends the third message to the first node, and correspondingly, the first node may receive the third message from the second node. Optionally, the first node may verify the first verification value. Further, when the first node successfully verifies the first verification value, a subsequent procedure is performed, for example, step S709 and some or all subsequent steps are continued to be performed. Otherwise, a procedure ends.

Step S709: The first node determines a first key.

For example, the first node calculates the first key based on the first private key, the second public key, and the selected key agreement algorithm.

Step S710: The first node determines a second verification value.

In a possible implementation, second verification value=KDF (DH key, third message content, second message content, and topology configuration message content). The DH key is the first key determined in step S709, and the KDF used to generate the first verification value is the KDF selected by the first node.

In addition, the third message content includes some or all information in the third message, or the third message content includes information obtained by processing some or all of information in the third message. For example, when the third message includes the second random number, the second public key, and the first verification value, third message content=second random number||second public key||first verification value.

Similarly, the topology configuration message content includes some or all information in the topology configuration message, or the topology configuration message content includes information obtained by processing some or all information in the topology configuration message.

In another possible implementation, first verification value=KDF (DH key, second random number, topology configuration message content).

Step S711: The first node sends a fifth message to the second node.

The fifth message carries the second verification value.

Step S712: The first node determines an encryption key based on the first key.

Further, the first node may further derive an integrity protection key or an authenticated encryption key based on the first key.

Step S713: The second node determines an encryption key based on the first key.

Specifically, the first node derives the encryption key based on the first key.

Further, the first node may further derive an integrity protection key or an authenticated encryption key based on the first key.

Step S714: The second node sends a key request message to the first node. Correspondingly, the first node receives the key request message from the second node.

Step S715: The first node sends a network key configuration message to the second node.

The network key configuration message includes the network key of the first network. Optionally, the network key configuration message may further include an ID of the network key of the first network. Optionally, the fifth message may be a network key configuration message, or a network key configuration message encapsulated at an access layer.

Optionally, the first node determines the network key NetKey of the first network that the first node joins, and includes NetKey in the key configuration message for sending to the second node.

Optionally, the first node may derive the encryption key based on the first key, and the network key configuration message may be encrypted based on the encryption key and then sent. Correspondingly, the second node may decrypt ciphertext based on the encryption key, to obtain the network key NetKey of the first network.

Further, the first node may further derive the integrity protection key from the first key. Optionally, integrity protection is performed on the network key configuration message based on the integrity protection key.

Optionally, the first node may derive the authenticated encryption key based on the first key, and the network key configuration message may be authenticated and encrypted based on the authenticated encryption key.

Further, the second node may further send a sixth message to the first node, where the sixth message indicates that network key configuration is completed.

Step S716: The first node and the second node perform security protection on a network layer based on the network key of the first network.

Further, the first node and the second node may start a wireless adjacency protocol.

In the embodiment shown in FIG. 7, in a process in which the first node joins the first network, the first node and the second node agree on the key agreement algorithm and the key derivation function. The key agreement algorithm is used to determine the first key, and the first key is used to perform security protection on information transmitted between the nodes, and the key derivation function is used to verify the information transmitted between the two nodes, to ensure that the transmitted information is not tampered with. In this way, the first node can distribute the network key of the first network in a secure environment, thereby improving network security. In addition, various security algorithms are agreed on, thereby improving a capability of the network to accommodate a plurality of types of nodes, and improving network availability.

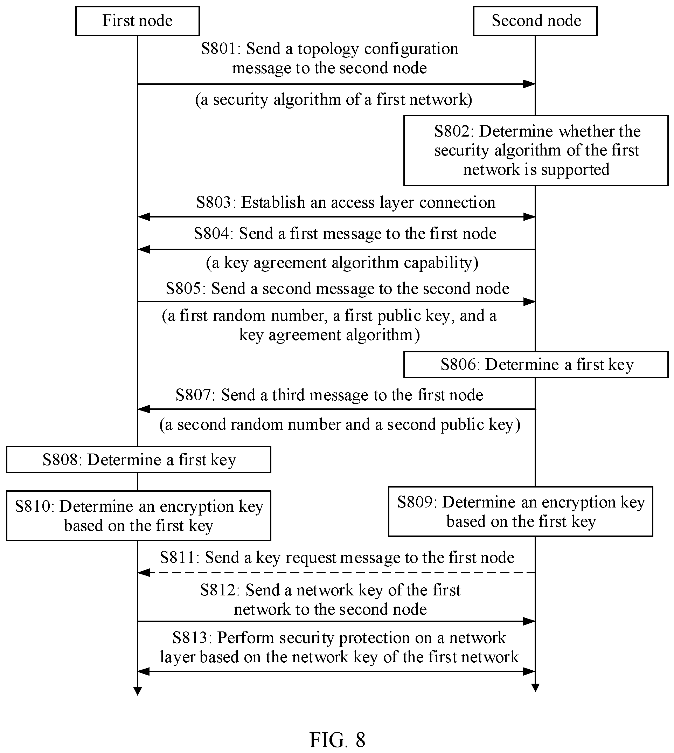

FIG. 8 is a schematic flowchart of another communication method according to an embodiment of this application. The communication method may include some or all of steps S801 to S813. It should be understood that the following uses only a sequence of steps S801 to S813 as an example for description. In a specific implementation process, occasions for performing some steps may be changed. Steps S801 to S813 are specifically as follows.

Step S801: A first node sends a topology configuration message. Correspondingly, a second node may receive the topology configuration message from the first node.

Step S802: The second node determines whether a security algorithm of a first network is supported.

Step S803: The first node and the second node establish an access layer connection.

Step S804: The second node sends a first message to the first node. Correspondingly, the first node receives the first message.

The first message carries a key agreement algorithm capability.

Step S805: The first node sends a second message to the second node. Correspondingly, the second node receives the second message.

The second message carries a first public key, and the second message further indicates a key agreement algorithm selected by the first node. Optionally, the second message further carries a first random number.

Step S806: The second node determines a first key.

Step S807: The second node sends a third message to the first node. Correspondingly, the first node receives the third message.

The third message carries a second public key. Further, the third message further carries a second random number.

Step S808: The first node determines a first key.

Step S809: The second node determines an encryption key based on the first key.

Step S810: The first node determines an encryption key based on the first key.

Step S811: The second node sends a key request message to the first node. Correspondingly, the first node receives the key request message.

Step S812: The first node sends a network key of the first network to the second node.

Specifically, when the network key of the first network is sent, the network key is encrypted based on the encryption key for sending.

Step S813: The first node and the second node perform security protection on a network layer based on the network key of the first network.

In the embodiment shown in FIG. 8, the first node and the second node may determine the key agreement algorithm through agreement, and determine the first key based on the key agreement algorithm. The first key is used to perform security protection on information transmitted between the nodes. If parameters transferred by the first node and the second node in a key agreement process are not tampered with, the second node and the first node may determine the consistent first key, so that the second node can decrypt ciphertext to obtain the network key of the first network. In this way, the first node can distribute the network key of the first network in a secure environment, thereby improving network security. In addition, the key agreement algorithm is agreed on, thereby improving a capability of the network to accommodate a plurality of types of nodes, and improving network availability.

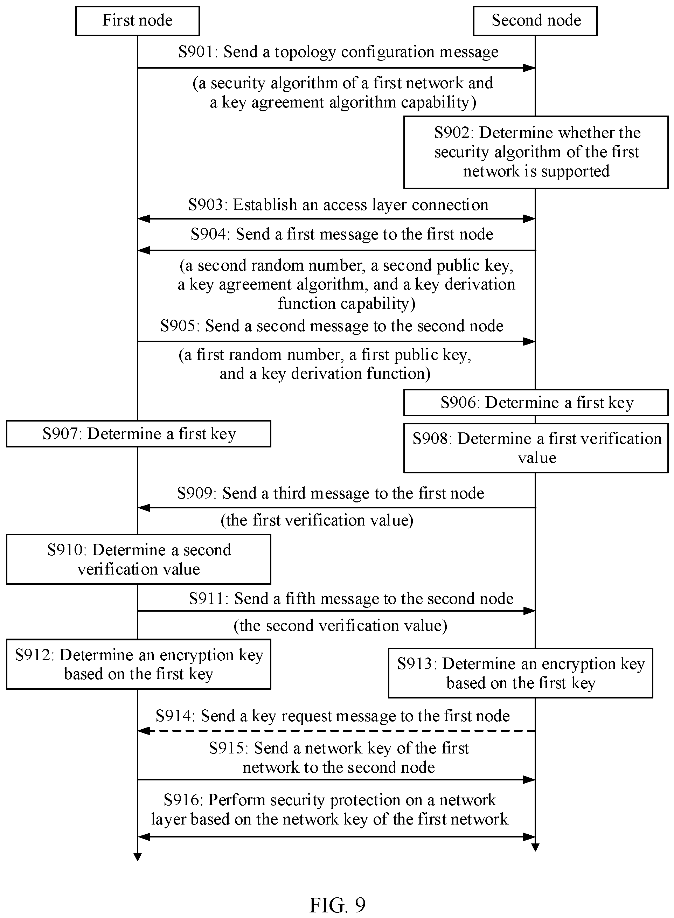

FIG. 9 is a schematic flowchart of another communication method according to an embodiment of this application. The communication method may include some or all of steps S901 to S916. It should be understood that the following uses only a sequence of steps S901 to S916 as an example for description. In a specific implementation process, occasions for performing some steps may be changed. Steps S901 to S916 are specifically as follows.

Step S901: The first node sends a topology configuration message. Correspondingly, a second node may receive the topology configuration message from the first node.

The topology configuration message may include information about a first network and a key agreement algorithm capability of the first node.

Step S902: The second node determines whether a security algorithm of the first network is supported. For related descriptions, refer to step S702.

Step S903: The first node and the second node establish an access layer connection. For related descriptions, refer to step S703.

Step S904: The second node sends a first message to the first node. Correspondingly, the first node may receive the first message from the second node.

The first message carries a second public key, a key agreement algorithm selected by the second node, and a key agreement algorithm capability of the second node. The second public key is generated by the second node based on the selected key agreement algorithm and a second private key generated by the second node.

Optionally, the first message further carries a second random number.

Step S905: The first node sends a second message to the second node. Correspondingly, the second node may receive the second message from the first node.

The second message carries a first public key, and the second message further indicates a key derivation function selected by the first node. Further, the second message further carries a first random number.

Step S906: The second node determines a first key.

For example, the second node calculates the first key based on a key agreement algorithm selected by the first node, the second private key, and the first public key.

Step S907: The first node determines a first key.

For example, the first node calculates the first key based on a first private key, the second public key, and the selected key agreement algorithm.

Step S908: The second node determines a first verification value.

In a possible implementation, first verification value=KDF (DH key, second message content, topology configuration message content). The DH key is the first key determined in step S906, and the KDF used to generate the first verification value is a KDF selected by the second node.

In another possible implementation, first verification value=KDF (DH key, first random number, topology configuration message content). Certainly, in the specific implementation process, more or fewer parameters may participate in generating the first verification value.

Step S909: The second node sends a third message to the first node.

The third message carries the first verification value. For related descriptions, refer to step S508.

Step S910: The first node determines a second verification value.

In a possible implementation, second verification value=KDF (DH key, third message content, second message content, and topology configuration message content). In another possible implementation, first verification value=KDF (DH key, second random number, topology configuration message content). Certainly, in the specific implementation process, more or fewer parameters may participate in generating the first verification value.

Step S911: The first node sends a fifth message to the second node. Correspondingly, the second node receives the fifth message from the first node. The fifth message carries the second verification value.

Step S912: The first node determines an encryption key based on the first key.

Step S913: The second node determines an encryption key based on the first key.

Step S914: The second node sends a key request message to the first node. Correspondingly, the first node receives the key request message.

Step S915: The first node sends a network key of the first network to the second node.

Specifically, the first node determines the network key NetKey of the first network that the first node joins. When the network key of the first network is sent, the network key is encrypted based on the encryption key for sending.

Step S916: Perform security protection on a network layer based on the network key of the first network.

For related descriptions in the embodiment shown in FIG. 9, refer to the embodiment shown in FIG. 7.

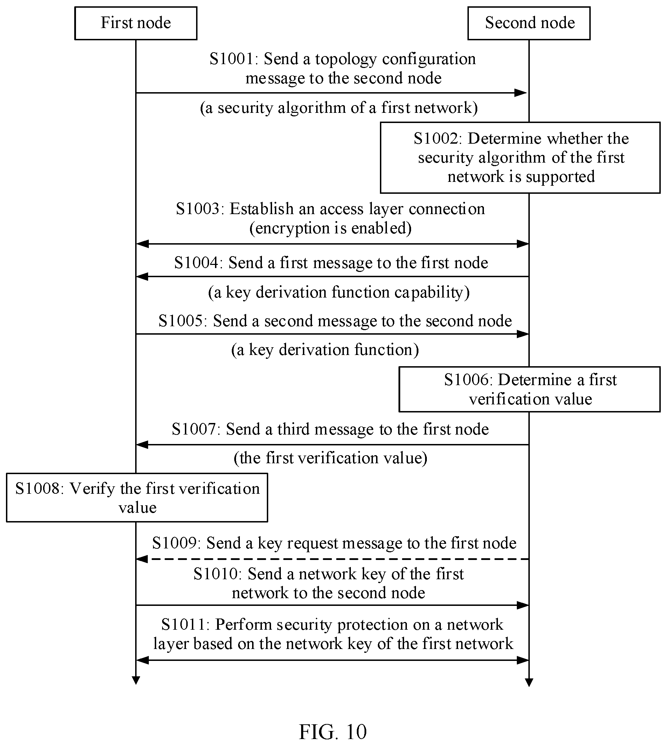

FIG. 10 is a schematic flowchart of another communication method according to an embodiment of this application. The communication method may include some or all of steps S1001 to S1011. It should be understood that the following uses only a sequence of steps S1001 to S1011 as an example for description. In a specific implementation process, occasions for performing some steps may be changed. Steps S1001 to S1011 are specifically as follows.

Step S1001: A first node sends a topology configuration message. Correspondingly, a second node may receive the topology configuration message from the first node.

Refer to the description of step S701.

Step S1002: The second node determines whether a security algorithm of a first network is supported. For related descriptions, refer to step S702.

Step S1003: The first node and the second node establish an access layer connection.

Encryption of the access layer connection between the first node and the second node is enabled. For related descriptions, refer to step S703.

Step S1004: The second node sends a first message to the first node. Correspondingly, the first node may receive the first message from the second node.

The first message carries a KDF capability of the second node. Optionally, the first message further carries a second random number.

Step S1005: The first node sends a second message to the second node. Correspondingly, the second node may receive the second message from the first node.

The second message further indicates a key derivation function selected by the first node. Further, the second message further carries a first random number.

Step S1006: The second node determines a first verification value.

In a possible implementation, first verification value=KDF (first parameter, second message content, topology configuration message content). The first parameter is a parameter defined in advance (for example, before the first verification value is generated), for example, ZERO. The KDF used to generate the first verification value is a KDF selected by the second node.

In another possible implementation, first verification value=KDF (first parameter, first random number, topology configuration message content). Certainly, in the specific implementation process, more or fewer parameters may participate in generating the first verification value.

Step S1007: The second node sends a third message to the first node.

The third message carries the first verification value. For related descriptions, refer to step S708.

Step S1008: The first node verifies the first verification value.

For example, the first node calculates a first key based on a first private key, a second public key, and a selected key agreement algorithm.

Step S1009: The second node sends a key request message to the first node. Correspondingly, the first node receives the key request message.

Step S1010: The first node sends a network key of the first network to the second node.

Specifically, the first node includes the network key of the first network in a fourth message, where the fourth message is encrypted at an access layer. Correspondingly, when receiving the fourth message at the access layer, the second node may decrypt the fourth message based on a key at the access layer, to obtain the network key of the first network.

Step S1011: The first node and the second node perform security protection on a network layer based on the network key of the first network.

In the embodiment shown in FIG. 8, the first node secretly transmits the network key of the first network based on an access layer encryption mechanism. Before the key is transmitted, the first node and the second node may obtain the KDF through agreement, and verify, based on the KDF, that information included in the topology configuration message is not tampered with, to determine that a communication environment between the first node and the second node is secure. In this process, the first node and the second node obtain a first KDF through agreement. This can adapt to a case in which a plurality of nodes with different security capabilities join the network, so that the network can be applied to a scenario in which different types of devices are used, thereby improving network inclusiveness.

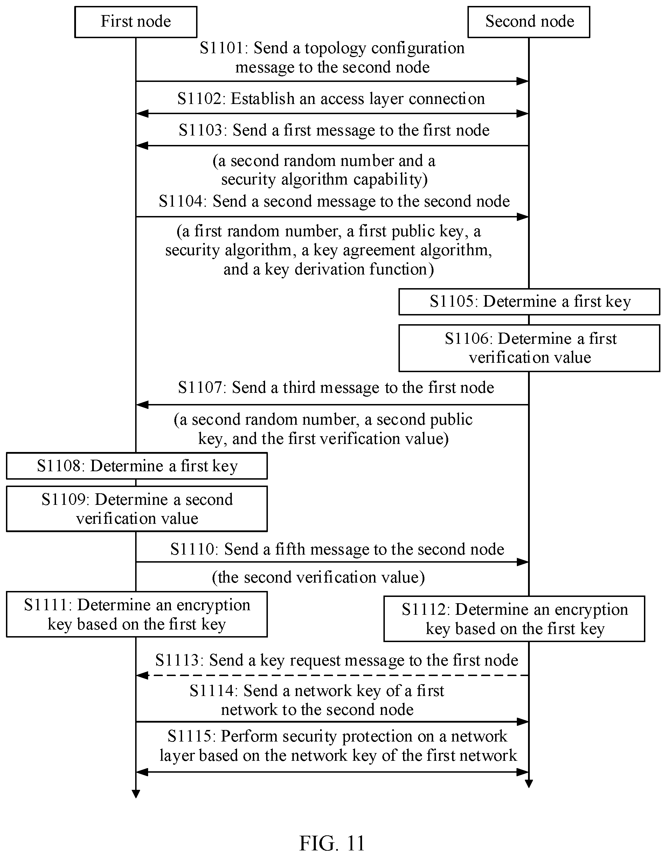

FIG. 11 is a schematic flowchart of another communication method according to an embodiment of this application. The communication method may include some or all of steps S1101 to S1115. It should be understood that the following uses only a sequence of steps S1101 to S1115 as an example for description. In a specific implementation process, occasions for performing some steps may be changed. Steps S1101 to S1115 are specifically as follows.

Step S1101: A first node sends a topology configuration message. Correspondingly, a second node may receive the topology configuration message from the first node. Refer to the description of step S701.

Step S1102: The first node and the second node establish an access layer connection. Encryption of the access layer connection between the first node and the second node is enabled. For related descriptions, refer to step S703.

Step S1103: The second node sends a first message to the first node. Correspondingly, the first node may receive the first message from the second node.

The first message carries a security capability of the second node. The security capability of the second node indicates a security algorithm, a key agreement algorithm, and a KDF that are supported by the second node.

Optionally, the first message further carries a second random number.

Step S1104: The first node sends a second message to the second node. Correspondingly, the second node may receive the second message from the first node.

The second message carries a first public key, and the second message further indicates a key agreement algorithm and a key derivation function that are selected by the first node.

For example, the first node selects a key derivation function with a highest priority and a key agreement algorithm with a highest priority based on a security algorithm capability of a network access device. The first node generates a first private key, and determines the first public key based on the selected key agreement algorithm.

Further, the second message further indicates a security algorithm of a first network. Optionally, the second message further carries a first random number.

In a possible implementation, if the security algorithm supported by the second node does not include the security algorithm of the first network, the first node sends a failure message to the second node, where a cause value is carried.

Step S1105: The second node determines a first key.

For example, the second node may generate a second private key, and calculate the first key based on the key agreement algorithm selected by the first node, the second private key, and the first public key. Optionally, the first key may also be referred to as a network key, a DH key, or the like.

Step S1106: The second node determines a first verification value.

In a possible implementation, first verification value=KDF (DH key, second message content, topology configuration message content). The DH key is the first key determined in step S1105, and the KDF used to generate the first verification value is the KDF selected by the first node.

In another possible implementation, first verification value=KDF (DH key, first random number, topology configuration message content).

Step S1107: The second node sends a third message to the first node. Correspondingly, the first node receives the third message from the first node. The third message carries a second public key and the first verification value.

Step S1108: The first node determines a first key.

Step S1109: The first node determines a second verification value.

In a possible implementation, second verification value=KDF (DH key, third message content, second message content, and topology configuration message content). The DH key is the first key determined in step S1105, and the KDF used to generate the first verification value is the KDF selected by the first node.

In another possible implementation, first verification value=KDF (DH key, second random number, topology configuration message content).

Step S1110: The first node sends a fifth message to the second node. Correspondingly, the second node receives the fifth message from the first node. The fifth message carries the second verification value.

Step S1111: The first node determines an encryption key based on the first key.

Step S1112: The second node determines an encryption key based on the first key.

Step S1113: The second node sends a key request message to the first node. Correspondingly, the first node receives the key request message.

Step S1114: The first node sends a network key of the first network to the second node.

Specifically, when the network key of the first network is sent, the network key is encrypted based on the encryption key for sending.

Step S1115: The first node and the second node perform security protection on a network layer based on the network key of the first network.

In the embodiment shown in FIG. 11, in a process in which the first node joins the first network, the first node and the second node agree on the key agreement algorithm and the key derivation function. The key agreement algorithm is used to determine the first key, and the first key is used to perform security protection on information transmitted between the nodes, and the key derivation function is used to verify the information transmitted between the two nodes, to ensure that the transmitted information is not tampered with. In this way, the first node can distribute the network key of the first network in a secure environment, thereby improving network security. In addition, various security algorithms are agreed on, thereby improving a capability of the network to accommodate a plurality of types of nodes, and improving network availability.

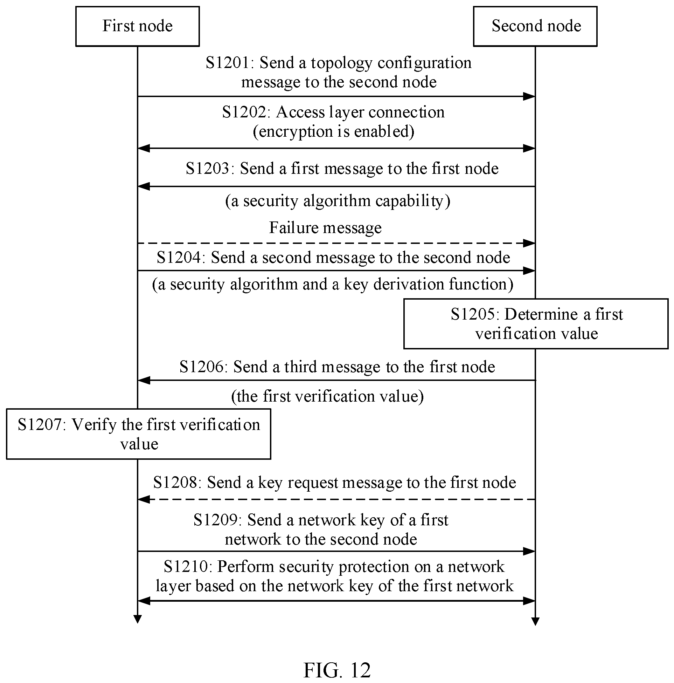

FIG. 12 is a schematic flowchart of another communication method according to an embodiment of this application. The communication method may include some or all of steps S1201 to S1210. It should be understood that the following uses only a sequence of steps S1201 to S1210 as an example for description. In a specific implementation process, occasions for performing some steps may be changed. Steps S1201 to S1210 are specifically as follows.

Step S1201: A first node sends a topology configuration message. Correspondingly, a second node may receive the topology configuration message from the first node.

Refer to the description of step S1001.

Step S1202: The first node and the second node establish an access layer connection.

Encryption of the access layer connection between the first node and the second node is enabled. For related descriptions, refer to step S703.

Step S1203: The second node sends a first message to the first node. Correspondingly, the first node may receive the first message from the second node.

The first message carries a KDF capability of the second node. Optionally, the first message further carries a second random number.

Step S1204: The first node sends a second message to the second node. Correspondingly, the second node may receive the second message from the first node.

The second message further indicates a key derivation function selected by the first node and a security algorithm of a first network. Further, the second message further carries a first random number.

Step S1205: The second node determines a first verification value.

In a possible implementation, first verification value=KDF (first parameter, second message content, topology configuration message content). The first parameter is a parameter defined in advance (for example, before the first verification value is generated), for example, ZERO. The KDF used to generate the first verification value is a KDF selected by the second node.

In another possible implementation, first verification value=KDF (first parameter, first random number, topology configuration message content). Certainly, in the specific implementation process, more or fewer parameters may participate in generating the first verification value.

Step S1206: The second node sends a third message to the first node.

The third message carries the first verification value. For related descriptions, refer to step S708.

Step S1207: The first node verifies the first verification value.

For example, the first node calculates a first key based on a first private key, a second public key, and a selected key agreement algorithm.

Step S1208: The second node sends a key request message to the first node. Correspondingly, the first node receives the key request message.

Step S1209: The first node sends a network key of the first network to the second node.

Specifically, the first node includes the network key of the first network in a fourth message, where the fourth message is encrypted at an access layer. Correspondingly, when receiving the fourth message at the access layer, the second node may decrypt the fourth message based on a key at the access layer, to obtain the network key of the first network.

Step S1210: The first node and the second node perform security protection on a network layer based on the network key of the first network.

In the embodiment shown in FIG. 12, the first node secretly transmits the network key of the first network based on an access layer encryption mechanism. Before the key is transmitted, the first node and the second node may obtain the KDF through agreement, and verify, based on the KDF, that information included in the topology configuration message is not tampered with, to determine that a communication environment between the first node and the second node is secure. In this process, the first node and the second node obtain a first KDF through agreement. This can adapt to a case in which a plurality of nodes with different security capabilities join the network, so that the network can be applied to a scenario in which different types of devices are used, thereby improving network inclusiveness.

The foregoing describes in detail the methods in embodiments of this application. The following provides apparatuses in embodiments of this application.

It should be understood that division into units in the apparatuses provided in embodiments of this application is merely logical function division. During actual implementation, all or some units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of the units in the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented via a programmable logic device (programmable logic device, PLD). A field programmable gate array (Field Programmable Gate Array, FPGA) is used as an example, and the field programmable gate array may include a large quantity of logic gate circuits, and a connection relationship between the logic gate circuits is configured based on a configuration file, to implement the functions of some or all of the foregoing units. All units in the foregoing apparatus may be implemented in a form of software invoked by a processor; or all units may be implemented in a form of a hardware circuit; or some units may be implemented in a form of software invoked by a processor, and a remaining part may be implemented in a form of a hardware circuit.

In embodiments of this application, the processor is a circuit with a signal processing capability. In an implementation, the processor may be a circuit with an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is an application-specific integrated circuit (application-specific integrated circuit, ASIC) or a hardware circuit, for example, an FPGA, implemented by a programmable logic device (programmable logic device, PLD). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the foregoing apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units in the apparatus. Types of the at least one processor may be different. For example, the at least one processor includes a CPU and an FPGA, a CPU and an artificial intelligence processor, or a CPU and a GPU.

The following lists several possible apparatuses.

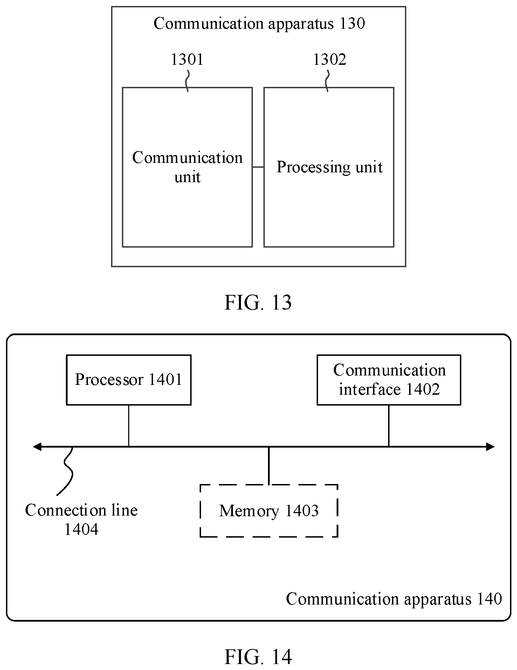

FIG. 13 is a diagram of a structure of a communication apparatus according to an embodiment of this application. Optionally, the communication apparatus 130 may be an independent device, for example, a node. Alternatively, the communication apparatus 130 may be a component in an independent device (for example, a node), for example, a chip or an integrated circuit. The communication apparatus 130 is configured to implement the communication method, for example, the communication method shown in any one or more of the embodiment in FIG. 2, FIG. 5, FIG. 6, FIG. 7, FIG. 8, FIG. 9, FIG. 10, FIG. 11, or FIG. 12. Further, in some scenarios, the communication apparatus is further configured to implement an association procedure shown in FIG. 3 or FIG. 4.

As shown in FIG. 13, the communication apparatus 130 may include a communication unit 1301 and a processing unit 1302. The communication unit 1301 is configured to implement one or more operations such as sending, receiving, listening, transmission, connection establishment, and response, and is further configured to implement another operation of the communication method. The processing unit 1302 is configured to implement one or more operations such as processing, calculation, determining, generation, updating, encryption, and decryption, and is further configured to implement another operation of the communication method.

In a possible design, the communication apparatus 130 includes a communication unit 1301 and a processing unit 1302. The communication apparatus 130 is configured to implement a method on a first node side in the foregoing communication method.

**In a possible implementation,** the communication unit 1301 is configured to:
send a topology configuration message to a second node, where the topology configuration message includes information about a first network; and
determine a first KDF through agreement with the second node, where the first KDF is a KDF supported by both a first node and the second node.

The communication unit 1301 and the processing unit 1302 are configured to verify first information with the second node based on the first KDF.

The communication unit 1301 is further configured to send a network key of a first network to the second node through encryption when successfully verifying the first information. The network key of the first network is used to perform security protection on the first network. For example, the network key of the first network is used to perform security protection on a network layer between nodes in the first network.

**Optionally,** the communication apparatus 130 is the first node, or the communication apparatus 130 is included in the first node; and **the first network includes the first node.**

**In a possible implementation,** the communication unit 1301 is further configured to send an ID of the network key of the first network to the second node.

**In a possible implementation,** information transmitted between the first node and the second node includes information included in the topology configuration message.

**In a possible implementation of the first aspect,** the communication unit 1301 is further configured to receive a first verification value from the second node, and the processing unit 1302 verifies the first verification value based on at least the first KDF and the information included in the topology configuration message. The first verification value is associated with at least the first KDF and the information included in the topology configuration message.

Further, successfully verifying the first information includes: successfully verifying the first verification value. Optionally, the first verification value may be included in a third message, or may be carried in a third message.

**In a possible implementation,** the first KDF may be a KDF with a highest priority in a KDF supported by the second node. Optionally, the first KDF may be a KDF supported by both the first node and the second node. In this case, the first KDF may be the KDF supported by both the first node and the second node, and is a KDF with a highest priority.

**In a possible implementation,** the communication apparatus 130 may select the first KDF from the KDF supported by both the second node and the first node, and indicate the selected first KDF to the second node.

**In a possible implementation,** the communication unit 1301 is further configured to: receive a KDF capability of the second node from the second node, and send indication information of the first KDF to the second node. The KDF capability of the second node indicates the KDF supported by the second node.

In some scenarios, the KDF capability of the second node, the indication information of the first KDF, and the like also belong to the first information. In this way, the first node and the second node can verify whether the information is tampered with, thereby improving security.

**In a possible implementation,** the communication unit 1301 is further configured to: receive a first message from the second node, and send a second message to the second node. The first message includes a KDF capability of the second node, and the second message includes at least the indication information of the first KDF. It should be understood that the first message and the second message may further include other information.

**In a possible implementation,** the information transmitted between the first node and the second node includes one or more of information included in the second message, information included in the topology configuration message, and the like.

**In a possible implementation,** the communication unit 1301 is further configured to: receive a third message from the second node, and verify a first verification value based on the first KDF, a first key, the information included in the second message, and the information included in the topology configuration message. The third message includes the first verification value, the first verification value is associated with the first KDF, the first key, the information included in the second message, and the information included in the topology configuration message, and the first key may be a key obtained through agreement between the first node and the second node. Further, successfully verifying the first information includes: successfully verifying the first verification value.

**In a possible implementation,** the communication unit 1301 is further configured to: receive a third message from the second node, and verify a first verification value based on the first KDF, a first parameter, the information included in the second message, and the information included in the topology configuration message. The third message includes the first verification value, the first verification value is associated with the first KDF, the first parameter, the information included in the second message, and the information included in the topology configuration message, and a value of the first parameter is predefined. For example, the first parameter is 128-bit data, and further, 128 bits are all 0. Further, successfully verifying the first information includes: successfully verifying the first verification value.

**In a possible implementation,** the communication unit 1301 is further configured to: send a KDF capability of the first node to the second node, where the KDF capability of the first node indicates a KDF supported by the first node; and receive the indication information of the first KDF from the second node. In some scenarios, the KDF capability of the first node, the indication information of the first KDF, and the like also belong to the first information.

**In a possible implementation,** security protection is performed in a process of verifying the first information with the second node based on the first KDF, to further improve security.

**In a possible implementation,** the communication unit 1301 is further configured to send a first random number to the second node. The random number may belong to the first information, to determine whether a message carrying the random number is tampered with.

**In a possible implementation,** the processing unit 1302 is further configured to generate a second verification value based on the first KDF, information included in the third message, information included in the first message, the information included in the topology configuration message, and the first key. The communication unit 1301 is further configured to send the second verification value to the second node.

Further, the communication unit 1301 is further configured to receive a second random number from the second node. Optionally, the second random number is included in the third message.

**Optionally,** the second verification value is carried in a fifth message sent by the first node to the second node. Further, security protection may be performed in a process of receiving the third message and sending the fifth message.

**In a possible implementation,** the communication unit 1301 and the processing unit are further configured to determine the first key through agreement with the second node based on the first key agreement algorithm. The first key (DH key) or a key derived from the first key is used to perform security protection on the information transmitted between the first node and the second node.

**In a possible implementation,** the first key agreement algorithm may be determined through agreement between the communication apparatus 130 and the second node.

**In another possible implementation,** the communication unit 1301 is further configured to: send a key agreement algorithm capability of the first node to the second node, and receive indication information, sent by the second node, of the first key agreement algorithm.

Optionally, the key agreement algorithm capability of the first node is included in the topology configuration message, and the indication information of the first key agreement algorithm is included in the first message.

**In another possible implementation,** the communication unit 1301 is further configured to: receive a key agreement algorithm capability of the second node from the second node, and send indication information of the first key agreement algorithm to the second node.

Optionally, the key agreement algorithm capability of the second node is included in the first message, and the indication information of the first key agreement algorithm is included in the second message.

**In another possible implementation,** the processing unit 1302 is further configured to: derive an encryption key from the first key, and encrypt a key of a first network layer based on the encryption key, to obtain ciphertext of the network key of the first network.

The communication unit 1301 is further configured to send the ciphertext of the network key of the first network to the second node.

**In another possible implementation,** the communication unit 1301 and the processing unit 1302 are further configured to establish an access layer connection to the second node, where access layer encryption between the first node and the second node is enabled.

The communication unit 1301 is further configured to send a fourth message to the second node, where the fourth message includes the network key of the first network, and the first message is encrypted at an access layer.

**In another possible implementation,** the communication unit 1301 is further configured to send an identifier of a security algorithm of the first network to the second node.

**In another possible implementation,** the communication unit 1301 is further configured to receive security capability information of the second node from the second node, and the processing unit 1302 is further configured to determine the security algorithm of the first network. Further, the communication unit 1301 is further configured to provide an identifier of the determined security algorithm of the first network to the second node.

In another possible design, the communication apparatus 130 includes a communication unit 1301 and a processing unit 1302. The communication apparatus 130 is configured to implement a method on a second node side in the foregoing communication method.

In a possible implementation, the communication unit 1301 is configured to receive a topology configuration message from a first node. The communication unit 1301 and the processing unit 1302 are configured to determine a first key derivation function KDF through agreement with the first node, where the first KDF is a KDF supported by both the first node and a second node. The processing unit 1302 is further configured to generate a first verification value based on the first KDF and first information. The communication unit 1301 is further configured to: send the first verification value to the first node, and receive a network key of a first network sent by the first node through encryption. The network key of the first network is used to perform security protection on a network layer between nodes in the first network.

**In a possible implementation,** information transmitted between the first node and the second node includes information included in the topology configuration message. The processing unit 1302 is further configured to generate the first verification value based on at least the first KDF and the information included in the topology configuration message, and the communication unit 1301 is further configured to send the first verification value to the first node. Optionally, the first verification value may be carried in a third message to be sent to the first node.

**In a possible implementation,** the first KDF may be a KDF with a highest priority in a KDF supported by the second node. Optionally, the first KDF may be a KDF supported by both the first node and the second node. In this case, the first KDF may be the KDF supported by both the first node and the second node, and is a KDF with a highest priority.

**In a possible implementation,** the communication unit 1301 is further configured to: send a KDF capability of the second node to the first node, and receive indication information of the first KDF from the first node. In some scenarios, the KDF capability of the second node, the indication information of the first KDF, and the like also belong to the first information. In this way, the first node and the second node can verify whether the information is tampered with, thereby improving security.

**In a possible implementation,** the communication apparatus 130 may select the first KDF from the KDF supported by both the second node and the first node, and indicate the selected first KDF to the second node.

**In a possible implementation,** the information transmitted between the first node and the second node includes information included in the second message and/or information included in the topology configuration message.

**In a possible implementation,** the processing unit 1302 is further configured to generate the first verification value based on the information included in the second message and the information included in the topology configuration message. The communication unit 1301 is further configured to send a third message to the first node, where the third message includes the first verification value.

**In a possible implementation,** the processing unit 1302 is further configured to generate the first verification value based on the first KDF, a first key, the information included in the second message, and the information included in the topology configuration message. The communication unit 1301 is further configured to send a third message to the first node, where the third message includes the first verification value. The first key is obtained through agreement between the first node and the second node.

**In a possible implementation,** the processing unit 1302 is further configured to generate the first verification value based on the first KDF, a first parameter, the information included in the second message, and the information included in the topology configuration message. The communication unit 1301 is further configured to send a third message to the first node, where the third message includes the first verification value. The value of the first parameter is predefined, for example, 128 bits are all 0.

**In a possible implementation,** the communication unit 1301 is further configured to receive a first random number from the second node, where the first random number is used to participate in generating a verification value, or is used to derive a key or the like. Optionally, a second random number may be included in the second message. Further, the first information includes the second random number in the second message, that is, the first random number may participate in generating the first verification value.

**In a possible implementation,** the communication unit 1301 is further configured to receive a fifth message from the first node, where the fifth message includes a second verification value, and the second verification value is associated with the first KDF and at least one of the following information: information included in the third message, information included in the first message, the information included in the topology configuration message, and the first key. The processing unit 1302 is further configured to verify the first verification value based on the first KDF and same information.

For example, the second verification value is associated with the first KDF, the information included in the third message, the information included in the first message, the information included in the topology configuration message, and the first key. The second node verifies the second verification value based on the first KDF, the information included in the third message, the information included in the first message, the information included in the topology configuration message, and the first key.

**In a possible implementation,** the processing unit 1302 is further configured to determine the first key based on a first key agreement algorithm. The first key or a key derived from the first key is used to perform security protection on the information transmitted between the first node and the second node.

**In a possible implementation,** the communication unit 1301 and the processing unit 1302 are further configured to determine the first key agreement algorithm through agreement with the first node, where the first key agreement algorithm is a key agreement algorithm supported by the second node.

**In another possible implementation,** the communication unit 1301 is further configured to: receive a key agreement algorithm capability of the first node from the first node, and send indication information of the first key agreement algorithm to the first node. Optionally, the key agreement algorithm capability of the first node is included in the topology configuration message, and the indication information of the first key agreement algorithm is included in the first message.

**In another possible implementation,** the communication unit 1301 is further configured to: send a key agreement algorithm capability of the second node to the first node, and receive indication information of the first key agreement algorithm from the first node. Optionally, the key agreement algorithm capability of the second node is included in the first message, and the indication information of the first key agreement algorithm is included in the second message.

**In another possible implementation,** the communication unit 1301 is further configured to receive ciphertext of the network key of the first network. The processing unit 1302 is further configured to: derive an encryption key from the first key, and decrypt the ciphertext of the network key of the first network layer based on the encryption key, to obtain the network key of the first network.

**In another possible implementation,** the communication unit 1301 and the processing unit 1302 are further configured to establish an access layer connection to the first node, where access layer encryption is enabled. The communication unit 1301 is further configured to receive a fourth message, where the fourth message includes the network key of the first network, and the fourth message is encrypted at an access layer. The processing unit 1302 is further configured to decrypt the fourth message at the access layer to obtain the network key of the first network.

**In another possible implementation,** the communication unit 1301 is further configured to receive an identifier of a security algorithm of the first network from the first node.

**In another possible implementation**, the communication unit 1301 is further configured to send security capability information of the second node to the first node.

**In another possible implementation,** the communication unit 1301 is further configured to receive the second message from the first node, where the second message indicates that the second node fails to join the first network.

FIG. 14 is a diagram of a structure of another communication apparatus according to an embodiment of this application. The communication apparatus 140 may be an independent device, for example, a node, or may be a component included in an independent device, for example, a chip, a software module, or an integrated circuit. The communication apparatus 140 may include at least one processor 1401 and a communication interface 1402. Optionally, the communication apparatus may further include at least one memory 1403. Further, optionally, the communication apparatus may further include a connection line 1404. The processor 1401, the communication interface 1402, and/or the memory 1403 are/is connected through the connection line 1404, and/or communicate with each other through the connection line 1404 to transfer a control signal and/or a data signal.

The processor 1401 is a module for performing an arithmetic operation and/or a logical operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.

The communication interface 1402 may be configured to provide information input or output to the at least one processor, or configured to receive a signal sent from the outside and/or send a signal to the outside.

For example, the communication interface 1402 may include an interface circuit.

For example, the communication interface 1402 may include a wired link interface like an Ethernet cable, or may be a wireless link (Wi-Fi, Bluetooth, universal wireless transmission, a vehicle-mounted short-range communication technology, or another short-range wireless communication technology) interface.

Optionally, the communication interface 1402 may further include a radio frequency transmitter, an antenna, and the like. When the communication interface 1402 includes an antenna, there may be one or more antennas.

In a possible design, if the communication apparatus 140 is an independent device, the communication interface 1402 may include a receiver and a transmitter. The receiver and the transmitter may be a same component or different components. When the receiver and the transmitter are a same component, the component may be referred to as a transceiver.

In another possible design, if the communication apparatus 140 is a chip or a circuit, the communication interface 1402 may include an input interface and an output interface, and the input interface and the output interface may be a same interface or different interfaces.

Optionally, a function of the communication interface 1402 may be implemented via a transceiver circuit or a dedicated transceiver chip.

The memory 1403 is configured to provide storage space, and the storage space may store data, for example, an operating system and a computer program. The memory 1403 may be one or a combination of a random access memory (random access memory, RAM), a read-only memory (read-only memory, ROM), an erasable programmable read only memory (erasable programmable read only memory, EPROM), a compact disc read-only memory (compact disc read-only memory, CD-ROM), and the like.

Functions and actions of the modules or units in the communication apparatus 140 listed above are merely examples for description.

Functional units in the communication apparatus 140 may be configured to implement the foregoing communication method, for example, the communication method shown in FIG. 2, FIG. 5, FIG. 6, FIG. 7, FIG. 8, FIG. 9, FIG. 10, FIG. 11, or FIG. 12.

Optionally, the processor 1401 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a dedicated processor and a general-purpose processor.

Optionally, when the communication apparatus 140 includes at least one memory 1403, if the processor 1401 implements the foregoing communication method by invoking a computer program, the computer program may be stored in the memory 1403.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing communication method, for example, the communication method shown in FIG. 2, FIG. 5, FIG. 6, FIG. 7, FIG. 8, FIG. 9, FIG. 10, FIG. 11, or FIG. 12.

An embodiment of this application further provides a computer-readable storage medium. The computer-readable storage medium stores instructions. When the instructions are run on at least one processor (or a communication apparatus), the foregoing communication method, for example, the communication method shown in FIG. 2, FIG. 5, FIG. 6, FIG. 7, FIG. 8, FIG. 9, FIG. 10, FIG. 11, or FIG. 12, is implemented.

An embodiment of this application further provides a computer program product. The computer program product includes computer instructions, and the computer instructions are used to implement the foregoing communication method, for example, the communication method shown in FIG. 2, FIG. 5, FIG. 6, FIG. 7, FIG. 8, FIG. 9, FIG. 10, FIG. 11, or FIG. 12.

An embodiment of this application further provides a terminal. The terminal includes the communication apparatus 130 and/or the communication apparatus 140.

In a possible implementation, the terminal includes a terminal node, and the terminal may be an intelligent terminal or a transportation means like a vehicle, an uncrewed aerial vehicle, or a robot.

It should be noted that, in embodiments of this application, the word "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces).

For example, at least one item (piece) of a, b, or c may represent: a, b, c, (a and b), (a and c), (b and c), or (a, b, and c), where a, b, and c may be singular or plural. The term "and/or" describes an association relationship between associated objects, and represents that three relationships may exist. For example, A and/or B may represent the following three cases: Only A exists, both A and B exist, and only B exists, where A and B may be singular or plural. The character "/" generally indicates an "or" relationship between associated objects.

In addition, unless otherwise stated, ordinal numbers such as "first" and "second" in embodiments of this application are used to distinguish between a plurality of objects, but are not intended to limit an order, a time sequence, priorities, or importance of the plurality of objects. For another example, the first node and the second node are merely used to facilitate description of fresh parameters in different implementations, and do not represent different execution operations, importance, structures, and the like.

In addition, the message in this application may also be considered as a type of information, and a name of the message may be randomly replaced. For example, the topology configuration message may also be referred to as topology configuration service data information. Names of other messages, information, and the like may also have other designs. Details are not described one by one herein.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

## Claims

1. A communication method, applied to a first node, wherein the method comprises:
sending a topology configuration message to a second node, wherein the topology configuration message comprises information about a first network;
determining a first key derivation function KDF through agreement with the second node, wherein the first KDF is a KDF supported by the second node;
verifying first information with the second node based on the first KDF, wherein the first information is information transmitted between the first node and the second node; and
when successfully verifying the first information, sending a network key of the first network to the second node through encryption.

2. The method according to claim 1, wherein the information transmitted between the first node and the second node comprises information comprised in the topology configuration message;
verifying the first information with the second node based on the first KDF comprises:
receiving a third message from the second node, wherein the third message comprises a first verification value, and the first verification value is associated with at least the first KDF and the information comprised in the topology configuration message; and
verifying the first verification value based on at least the first KDF and the information comprised in the topology configuration message; and
successfully verifying the first information comprises: successfully verifying the first verification value.

3. The method according to claim 1, wherein determining the first KDF through agreement with the second node comprises:
receiving a first message from the second node, wherein the first message comprises a KDF capability of the second node, and the KDF capability of the second node indicates the KDF supported by the second node; and
sending a second message to the second node, wherein the second message comprises at least indication information of the first KDF.

4. The method according to claim 3, wherein the information transmitted between the first node and the second node comprises information comprised in the second message and/or information comprised in the topology configuration message.

5. The method according to claim 4, wherein verifying the first information with the second node based on the first KDF comprises:
receiving a third message from the second node, wherein the third message comprises a first verification value, the first verification value is associated with the first KDF, a first key, the information comprised in the second message, and the information comprised in the topology configuration message, and the first key is obtained through agreement between the first node and the second node; and
verifying the first verification value based on the first KDF, the first key, the information comprised in the second message, and the information comprised in the topology configuration message; and
successfully verifying the first information comprises: successfully verifying the first verification value.

6. The method according to claim 4, wherein verifying the first information with the second node based on the first KDF comprises:
receiving a third message from the second node, wherein the third message comprises a first verification value, the first verification value is associated with the first KDF, a first parameter, the information comprised in the second message, and the information comprised in the topology configuration message, and a value of the first parameter is predefined; and
verifying the first verification value based on the first KDF, the first parameter, the information comprised in the second message, and the information comprised in the topology configuration message; and
successfully verifying the first information comprises: successfully verifying the first verification value.

7. The method according to any one of claims 3 to 6, wherein the second message further comprises a first random number.

8. The method according to claim 5 or 6, wherein the method further comprises:
generating a second verification value based on the first KDF, information comprised in the third message, information comprised in the first message, the information comprised in the topology configuration message, and the first key; and
sending the second verification value to the second node.

9. The method according to any one of claims 3 to 7, wherein the method further comprises:
determining a first key agreement algorithm through agreement with the second node, wherein the first key agreement algorithm is a key agreement algorithm supported by the second node; and
determining the first key based on the first key agreement algorithm, wherein the first key or a key derived from the first key is used to perform security protection on the information transmitted between the first node and the second node.

10. The method according to claim 9, wherein determining the first key agreement algorithm through agreement with the second node comprises:
sending a key agreement algorithm capability of the first node to the second node, wherein the key agreement algorithm capability of the first node indicates a key agreement algorithm supported by the first node; and
receiving indication information, sent by the second node, of the first key agreement algorithm.

11. The method according to claim 10, wherein the key agreement algorithm capability of the first node is comprised in the topology configuration message, and the indication information of the first key agreement algorithm is comprised in the first message.

12. The method according to claim 9, wherein determining the first key agreement algorithm through agreement with the second node comprises:
receiving a key agreement algorithm capability of the second node from the second node, wherein the key agreement algorithm capability of the second node comprises the key agreement algorithm supported by the second node; and
sending indication information of the first key agreement algorithm to the second node.

13. The method according to claim 12, wherein the key agreement algorithm capability of the second node is comprised in the first message, and the indication information of the first key agreement algorithm is comprised in the second message.

14. The method according to any one of claims 9 to 13, wherein sending the network key of the first network to the second node through encryption comprises:
deriving an encryption key from the first key;
encrypting a key of a first network layer based on the encryption key, to obtain ciphertext of the network key of the first network; and
sending the ciphertext of the network key of the first network to the second node.

15. The method according to any one of claims 1 to 14, wherein before sending the network key of the first network to the second node through encryption, the method further comprises: establishing an access layer connection to the second node, wherein encryption of the access layer connection is enabled; and
sending the network key of the first network to the second node through encryption comprises: sending a fourth message to the second node, wherein the fourth message comprises the network key of the first network, and the fourth message is encrypted at an access layer.

16. The method according to any one of claims 1 to 15, wherein the method further comprises:
the information about the first network comprises an identifier of a security algorithm of the first network, and
the security algorithm comprises an encryption algorithm and/or an integrity protection algorithm, or the security algorithm comprises an authenticated encryption algorithm.

17. The method according to claim 16, wherein a session security algorithm of the first network is preconfigured in the first node; or
before sending the topology configuration message to the second node, the method further comprises:
receiving security capability information of the second node from the second node, wherein the security capability information of the second node indicates a security algorithm supported by the second node; and
determining the security algorithm of the first network, wherein the security algorithm of the first network is a session security algorithm supported by the second node.

18. The method according to claim 17, wherein the first node is a grant node, and the first node is a unique node in the first network before the second node joins the first network.

19. A communication method, applied to a second node, wherein the method comprises:
receiving a topology configuration message from a first node, wherein the topology configuration message comprises information about a first network;
determining a first key derivation function KDF through agreement with the first node, wherein the first KDF is a KDF supported by the second node;
generating a first verification value based on the first KDF and first information, wherein the first information comprises information transmitted between the first node and the second node;
sending the first verification value to the first node; and
receiving a network key of the first network sent by the first node through encryption.

20. The method according to claim 19, wherein the information transmitted between the first node and the second node comprises information comprised in the topology configuration message.

21. The method according to claim 19, wherein determining the first KDF through agreement with the second node comprises:
sending a first message to the first node, wherein the first message comprises a KDF capability of the second node, and the KDF capability of the second node indicates the KDF supported by the second node; and
receiving a second message from the first node, wherein the second message comprises indication information of the first KDF.

22. The method according to claim 21, wherein the information transmitted between the first node and the second node comprises information comprised in the second message and/or information comprised in the topology configuration message.

23. The method according to claim 22, wherein generating the first verification value based on the first KDF and the first information comprises:
generating the first verification value based on the first KDF, a first key, the information comprised in the second message, and the information comprised in the topology configuration message, wherein the first key is obtained through agreement between the first node and the second node; and
sending the first verification value to the first node comprises:
sending a third message to the first node, wherein the third message comprises the first verification value.

24. The method according to claim 22, wherein generating the first verification value based on the first KDF and the first information comprises:
generating the first verification value based on the first KDF, a first parameter, the information comprised in the second message, and the information comprised in the topology configuration message, wherein the first key is obtained through agreement between the first node and the second node, and a value of the first parameter is predefined; and
sending the first verification value to the first node comprises:
sending a third message to the first node, wherein the third message comprises the first verification value.

25. The method according to any one of claims 21 to 24, wherein the second message further comprises a first random number.

26. The method according to claim 23 or 24, wherein the method further comprises:
receiving a second verification value from the first node, wherein the second verification value is associated with the first KDF, information comprised in the third message, the information comprised in the first message, the information comprised in the topology configuration message, and the first key; and
verifying the second verification value based on the first KDF, the information comprised in the third message, the information comprised in the first message, the information comprised in the topology configuration message, and the first key.

27. The method according to any one of claims 21 to 26, wherein the method further comprises:
determining a first key agreement algorithm through agreement with the first node, wherein the first key agreement algorithm is a key agreement algorithm supported by the second node; and
determining the first key based on the first key agreement algorithm, wherein the first key or a key derived from the first key is used to perform security protection on the information transmitted between the first node and the second node.

28. The method according to claim 27, wherein determining the first key agreement algorithm through agreement with the first node comprises:
receiving a key agreement algorithm capability of the first node from the first node, wherein the key agreement algorithm capability of the first node comprises a key agreement algorithm supported by the first node; and
sending indication information of the first key agreement algorithm to the first node, wherein the first key agreement algorithm is the key agreement algorithm supported by the second node.

29. The method according to claim 28, wherein the key agreement algorithm capability of the first node is comprised in the topology configuration message, and the indication information of the first key agreement algorithm is comprised in the first message.

30. The method according to claim 27, wherein determining the first key agreement algorithm through agreement with the first node comprises:
sending a key agreement algorithm capability of the second node to the first node, wherein the key agreement algorithm capability of the second node comprises the key agreement algorithm supported by the second node; and
receiving indication information of the first key agreement algorithm from the first node, wherein the first key agreement algorithm is the key agreement algorithm supported by the second node.

31. The method according to claim 30, wherein the key agreement algorithm capability of the second node is comprised in the first message, and the indication information of the first key agreement algorithm is comprised in the second message.

32. The method according to any one of claims 27 to 31, wherein receiving the network key of the first network sent by the first node through encryption comprises: receiving ciphertext of the network key of the first network; and
the method further comprises:
deriving an encryption key from the first key;
decrypting the ciphertext of the network key of the first network layer based on the encryption key, to obtain the network key of the first network.

33. The method according to any one of claims 19 to 32, wherein the method further comprises:
establishing an access layer connection to the first node, wherein encryption of the access layer connection is enabled; and
receiving the network key of the first network sent by the first node through encryption comprises:
receiving a fourth message, wherein the fourth message comprises the network key of the first network, and the fourth message is encrypted at the access layer; and
decrypting the fourth message at the access layer to obtain the network key of the first network.

34. The method according to any one of claims 19 to 33, wherein the method further comprises:
the information about the first network comprises an identifier of a security algorithm of the first network, and
the security algorithm comprises an encryption algorithm and/or an integrity protection algorithm, or the security algorithm comprises an authenticated encryption algorithm.

35. The method according to any one of claims 19 to 34, wherein the method further comprises:
sending security capability information of the second node to the first node, wherein the security capability information of the second node indicates a security algorithm supported by the second node.

36. A communication apparatus, wherein the communication apparatus comprises a communication unit and a processing unit, and the communication apparatus is configured to implement the method according to any one of claims 1 to 18.

37. A communication apparatus, wherein the communication apparatus comprises a communication unit and a processing unit, and the communication apparatus is configured to implement the method according to any one of claims 19 to 35.

38. A communication apparatus, wherein the communication apparatus comprises a processor and a communication interface; and
when the processor invokes a computer program or instructions in a memory, the method according to any one of claims 1 to 18 is performed, or the method according to any one of claims 19 to 35 is performed.

39. A chip, wherein the chip comprises a processor and a communication interface; and
the processor is configured to implement the method according to any one of claims 1 to 18, or implement the method according to any one of claims 19 to 35.

40. A communication system, wherein the communication system comprises a first node and a second node;
the first node comprises the communication apparatus according to claim 36; and
the second node comprises the communication apparatus according to claim 37.

41. A terminal, wherein the terminal comprises the communication apparatus according to claim 36, or comprises the communication apparatus according to claim 37, or comprises the communication apparatus according to claim 38, or comprises the chip according to claim 39, or comprises the communication system according to claim 40.

42. A computer-readable storage medium, wherein the computer-readable storage medium is configured to store instructions or a computer program; and
when the instructions or the computer program is executed, the method according to any one of claims 1 to 18 is implemented, or the method according to any one of claims 19 to 35 is implemented.
